# EUROPEAN PATENT APPLICATION

(11) **EP 4 618 481 A1**
(43) Date of publication of application: **17.09.2025**
(21) Application number: 22964700.3
(22) Date of filing: 07.11.2022
(51) Int. Cl.: H04L 27/00

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN)
(74) Representative: Mewburn Ellis LLP
(86) International application number: PCT/CN2022/130434
(87) International publication number: WO 2024/098222

(57) **Abstract**

The present disclosure relates to a communication method, a device, a computer-readable storage medium, a computer program product and a computer program. The method includes: receiving, by a first device, first information transmitted by an access network device, where the first information carries a key generation parameter; and generating, by the first device, a first key based on the key generation parameter; where the first key is used for performing security processing on data transmitted on a first connection, and the first connection is a connection between the first device and a second device.

## Description

### TECHNICAL FIELD

The present disclosure relates to the field of communications, and more particular, to a communication method, a device, a computer-readable storage medium, a computer program product and a computer program.

### BACKGROUND

In related technologies, a terminal device may need to perform data transmission with an access network device at a network-side through other terminal device. In such a scenario, a terminal device serving as a relay function is referred to as a relay terminal device, and a device connected to the access network device at the network-side through a relay is referred to as a remote terminal device. However, how to efficiently establish a secure connection between the remote terminal device and the relay terminal device has become a problem that needs to be solved.

### SUMMARY

Embodiments of the present disclosure provide a communication method, a device, a computer-readable storage medium, a computer program product and a computer program.

The embodiments of the present disclosure provide a communication method, and the method includes:
receiving, by a first device, first information transmitted by an access network device, where the first information carries a key generation parameter; and
generating, by the first device, a first key based on the key generation parameter, where the first key is used for performing security processing on data transmitted on a first connection, and the first connection is a connection between the first device and a second device.

The embodiments of the present disclosure provide a communication method, and the method includes:
receiving, by a second device, second information transmitted by an access network device, the second information carrying a first key, where the first key is used for performing security processing on data transmitted on a first connection, and the first connection is a connection between a first device and the second device.

The embodiments of the present disclosure provide a communication method, and the method includes:
transmitting, by an access network device, first information to a first device, and
transmitting, by the access network device, second information to a second device;
where the first information carries a key generation parameter, and the key generation parameter is used for generating a first key; and the first key is used for performing security processing on data transmitted on a first connection, and the first connection is a connection between the first device and the second device.

The embodiments of the present disclosure embodiment provide a first device, and the first device includes:
a first communication unit, configured to receive first information transmitted by an access network device, where the first information carries a key generation parameter; and
a first processing unit, configured to generate a first key based on the key generation parameter, where the first key is used for performing security processing on data transmitted on a first connection, and the first connection is a connection between the first device and a second device.

The embodiments of the present disclosure provide a second device, and the second device includes:
a second communication unit, configured to receive second information transmitted by an access network device, the second information carrying a first key, where the first key is used for performing security processing on data transmitted on a first connection, and the first connection is a connection between a first device and the second device.

The embodiments of the present disclosure provide an access network device, and the access network device includes:
a third communication unit, configured to transmit first information to a first device and transmit second information to a second device, where the first information carries a key generation parameter, and the key generation parameter is used for generating a first key; and the first key is used for performing security processing on data transmitted on a first connection, and the first connection is a connection between the first device and the second device.

The embodiments of the present disclosure provide a first device, and the first device includes a processor and a memory. The memory is configured to store a computer program, and the processor is configured to call the computer program stored in the memory and run the computer program, to enable the first device to perform the above method.

The embodiments of the present disclosure provide a second device, and the second device includes a processor and a memory. The memory is configured to store a computer program, and the processor is configured to call the computer program stored in the memory and run the computer program, to enable the second device to perform the above method.

The embodiments of the present disclosure provide an access network device, and the access network device includes a processor and a memory. The memory is configured to store a computer program, and the processor is configured to call the computer program stored in the memory and run the computer program, to enable the access network device to perform the above method.

The embodiments of the present disclosure provide a chip, and the chip is configured to implement the above methods.

Specifically, the chip includes a processor, and the processer is configured to call a computer program from a memory and run the computer program, to enable a device equipped with the chip to perform the above methods.

The embodiments of the present disclosure provide a computer-readable storage medium, and the computer-readable storage medium is configured to store a computer program, where the computer program, when executed by a device, enables the device to perform the above methods.

The embodiments of the present disclosure provide a computer program product, and the computer program product includes computer program instructions, where the computer program instructions enable a computer to perform the above methods.

The embodiments of the present disclosure provide a computer program, where the computer program, when executed on a computer, enables the computer to perform the above methods.

By adopting the above solutions, the first device may directly obtain the key generation parameter from the access network device to generate the first key, so as to perform security processing on the data transmitted on the connection between the first device and the second device. In this way, the problem of low processing efficiency caused by a large amount of signaling interactions with the core network device to obtain the key is avoided. According to the solutions provided in the present disclosure, the first device is enabled to directly interact with the access network device to obtain the first key, thereby improving the processing efficiency of generating the first key, and further ensuring that the secure connection between the first device and the second device is established efficiently.

### BRIEF DESCRIPTION OF THE DRAWINGS

FIG. 1 is a schematic diagram of an application scenario in accordance with the embodiments of the present disclosure.
FIG. 2 is a system architecture diagram of a multi-path (MP) split bearer in accordance with the embodiments of the present disclosure.
FIG. 3 is a schematic diagram of 5G dual connectivity architecture components.
FIG. 4 is a schematic flowchart of a communication method in accordance with an embodiment of the present disclosure.
FIG. 5 is a schematic flowchart of a communication method in accordance with another embodiment of the present disclosure.
FIG. 6 is a schematic flowchart of a communication method in accordance with yet another embodiment of the present disclosure.
FIGS. 7 to 13 are various exemplary flowcharts of processing flows of a remote UE and a relay UE in accordance with the embodiments of the present disclosure.
FIG. 14 is an exemplary process flowchart of a remote UE and a relay UE to obtain a key in the related art.
FIG. 15 is a schematic block diagram of a first device in accordance with an embodiment of the present disclosure.
FIG. 16 is a schematic block diagram of a second device in accordance with an embodiment of the present disclosure.
FIG. 17 is a schematic block diagram of an access network device in accordance with an embodiment of the present disclosure.
FIG. 18 is a schematic block diagram of an access network device in accordance with another embodiment of the present disclosure.
FIG. 19 is a schematic block diagram of a communication device in accordance with the embodiments of the present disclosure.
FIG. 20 is a schematic block diagram of a chip in accordance with the embodiments of the present disclosure.
FIG. 21 is a schematic block diagram of a communication system in accordance with the embodiments of the present disclosure.

### DETAILED DESCRIPTION

Technical solutions in the embodiments of the present disclosure will be described below in conjunction with the accompanying drawings in the embodiments of the present disclosure.

The technical solutions in the embodiments of the present disclosure may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (UMTS), a wireless local area network (WLAN), a wireless fidelity (WiFi), a fifth-generation communication (5th-Generation, 5G) system, or other communication systems.

Generally, the limited number of connections is supported by traditional communication systems and is easy to implement. However, with the development of the communication technology, mobile communication systems will not only support the traditional communication, but also support, for example, device to device (D2D) communication, machine to machine (M2M) communication, machine type communication (MTC), vehicle to vehicle (V2V) communication, or vehicle to everything (V2X) communication. The embodiments of the present disclosure may also be applied to these communication systems.

In a possible implementation, the communication system in the embodiments of the present disclosure may be applied to a carrier aggregation (CA) scenario, a dual connectivity (DC) scenario, or a standalone (SA) network deployment scenario.

In a possible implementation, the communication system in the embodiments of the present disclosure may be applied to an unlicensed spectrum, where the unlicensed spectrum may also be considered as a shared spectrum, or the communication system in the embodiments of the present disclosure may be applied to a licensed spectrum, where the licensed spectrum may also be considered as an unshared spectrum.

Various embodiments of the present disclosure are described in combination with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus or the like.

The terminal device may be a station (STATION, STA) in WLAN, or may be a cellular phone, a cordless phone, a session initiation protocol (SIP) phone, a wireless local loop (WLL) station, or a personal digital assistant (PDA) device, a handheld device with a wireless communication function, a computing device or another processing device connected to a wireless modem, an in-vehicle device, a wearable device, a terminal device in a next-generation communication system (e.g., an NR network), a terminal device in a future evolved public land mobile network (PLMN) network or the like.

In the embodiments of the present disclosure, the terminal device may be deployed on land, which includes indoor or outdoor, handheld, wearable, or in-vehicle; or the terminal device may be deployed on water (e.g., on a steamship); or the terminal device may be deployed in the air (e.g., on an airplane, on a balloon, or on a satellite).

In the embodiments of the present disclosure, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home or the like.

As an example rather than a limitation, in the embodiments of the present disclosure, the terminal device may also be a wearable device. The wearable device, which may also be referred to as a wearable smart device, is a generic term for devices that are developed by intelligent design on daily wears by using wearable technology and can be worn, such as glasses, gloves, a watch, clothing, and shoes. The wearable device is a portable device that is worn directly on the body, or integrated into the user's clothing or accessories. The wearable device is not only a hardware device, but also implements powerful functions through software supporting as well as data interaction or cloud interaction. Generalized wearable smart devices includes devices that have full functions and large sizes, and may implement all or part of functions without relying on smart phones (such as a smart watch or smart glasses), and devices that focus on a certain type of application functions only and need to be used in combination with any other device (e.g., a smart phone), such as various smart bracelets or smart jewelries for monitoring physical signs.

In the embodiments of the application, the network device may be a device used for communicating with a mobile device. The network device may be an access point (AP) in WLAN, a base station (Base Transceiver Station, BTS) in GSM or CDMA, or a base station (NodeB, NB) in WCDMA; or the network device may be an evolutional base station (Evolutional Node B, eNB or eNodeB) in LTE, a relay station or an access point, a network device (gNB) in an in-vehicle device, a wearable device or an NR network, a network device in a future evolved public land mobile network (PLMN) network, a network device in an NTN network or the like.

As an example rather than a limitation, in the embodiments of the present disclosure, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may also be a base station deployed on land, water, and other places.

In the embodiments of the present disclosure, the network device may provide services for a cell, and the terminal device may communicate with the network device through transmission resources (e.g., frequency domain resources, or spectrum resources) used by the cell. The cell may be a cell corresponding to the network device (e.g., the base station). The cell may belong to a macro base station or a base station corresponding to a small cell. The small cell here may include: a metro cell, a micro cell, a pico cell, a femto cell, etc. These small cells have characteristics of small coverage and low transmission power, and are applicable for providing a high-speed data transmission service.

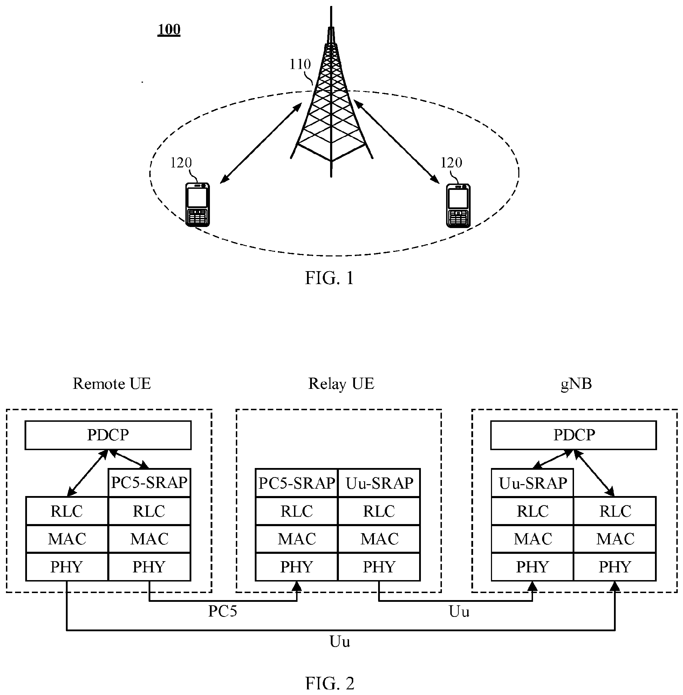

FIG. 1 exemplarily illustrates a communication system 100. The communication system includes one network device 110 and two terminal devices 120. In a possible implementation, the communication system 100 may include a plurality of network devices 110, and another number of terminal devices 120 may be included within a coverage range of each network device 110, which is not limited in the embodiments of the present disclosure.

In a possible implementation, the communication system 100 may further include other network entities such as a mobility management entity (MME) and an access and mobility management function (AMF), which is not limited in the embodiments of the present disclosure.

The network device may further include an access network device and a core network device. That is, the wireless communication system further includes a plurality of core networks for communicating with the access network device. The access network device may be an evolutional base station (evolutional node B, abbreviated as eNB or e-NodeB), a macro base station, a micro base station (also referred to as a "small base station"), a pico base station, an access point (AP), a transmission point (TP), or a new generation base station (new generation Node B, gNodeB) in a long-term evolution (LTE) system, a next generation (mobile communication system) (e.g., next radio, NR) system or an authorized auxiliary access long-term evolution (LAA-LTE) system.

It should be understood that a device having a communication function in the network or system in the embodiments of the present disclosure may be referred to as a communication device. By taking the communication system illustrated in FIG. 1 as an example, communication devices may include the network device with the communication function and the terminal device with the communication function, and the network device and the terminal device may be specific devices in the embodiments of the present disclosure, which will not be repeated here. The communication devices may further include other devices in the communication system, such as a network controller, a mobility management entity, and other network entities, which are not limited in the embodiments of the present disclosure.

To facilitate understanding of the embodiments of the present disclosure, the basic processes and basic concepts involved in the embodiments of the present disclosure are briefly described below. It should be understood that the basic processes and basic concepts introduced below do not limit the embodiments of the present disclosure.

The multi-path (MP) technology of UE-to-network relay (U2N Relay) refers to that: an MP bearer is supported between a UE and base station (such as, gNB), that is, the UE connects to the same gNB using one direct path and one indirect path. Compared with single-link, in the MP technology, a long-range UE (or referred to as remote UE) may provide enhanced user data throughput and reliability, and a gNB may offload a direct connection of a congested long-range UE (or referred to as remote UE) to an indirect connection passes through a relay UE; where the relay UE and the long-range UE (or referred to as remote UE) may be in different cells, and the different cells may be different cells with the same frequency or different cells with different frequencies. By adopting the MP technology, efficient path switching between the direct path (or referred to as direct connection) and the indirect path (or referred to as indirect connection) may be provided. It should be pointed out that, unless otherwise specified hereinafter, the long-range UE and remote UE have the same meaning, the direct path and direct connection have the same meaning, and the indirect path and indirect connection have the same meaning, which will not be repeated hereinafter.

A direct bearer (bearer mapped to the direct path on Uu), indirect bearer (bearer mapped to the indirect path through the relay UE) and MP split bearer (bearer mapped to the above two paths) are supported between the UE (i.e. remote UE) and gNB.

MP may have scenario 1 and scenario 2; where scenario 1 refers to that the UE is connected with the gNB via Layer-2 UE-to-network relay; and scenario 2 refers to that the UE is connected with the gNB via another UE. The present disclosure will mainly describe scenario 1 hereinafter, but the following description may also be applied to scenario 2.

For the MP split bearer of scenario 1, one packet data convergence protocol (PDCP) entity of the remote UE configures one direct Uu radio link control (RLC) channel and one indirect PC5 RLC channel. In conjunction with FIG. 2 for illustration, when the remote UE performs uplink transmission, the PDCP entity of the remote UE transmits data to the Uu RLC entity and the PC5 RLC entity having a sidelink relay adaptation protocol (SRAP) entity of the remote UE. When the remote UE performs downlink data reception, the PDCP entity of the remote UE receives data from the Uu RLC entity and the PC5 RLC entity having the SRAP entity of the remote UE. It may also be illustrated in FIG. 2 that when the gNB performs uplink data reception, a PDCP entity of the gNB receives data from an Uu RLC entity and a RLC entity having an Uu SRAP entity of the gNB. When the gNB performs downlink transmission, the PDCP entity of the gNB transmits data to the Uu RLC entity and the RLC entity having the Uu SRAP entity of the gNB. Accordingly, the connection between the relay UE and the remote UE performs data transmission through the PC5 SRAP entity, as well as RLC, medium access control (MAC) and physical (PHY) layer associated with the PC5 SRAP entity; and the connection between the relay UE and the gNB performs data transmission through the Uu SRAP entity, as well as RLC, MAC and PHY entities associated with the Uu SRAP entity.

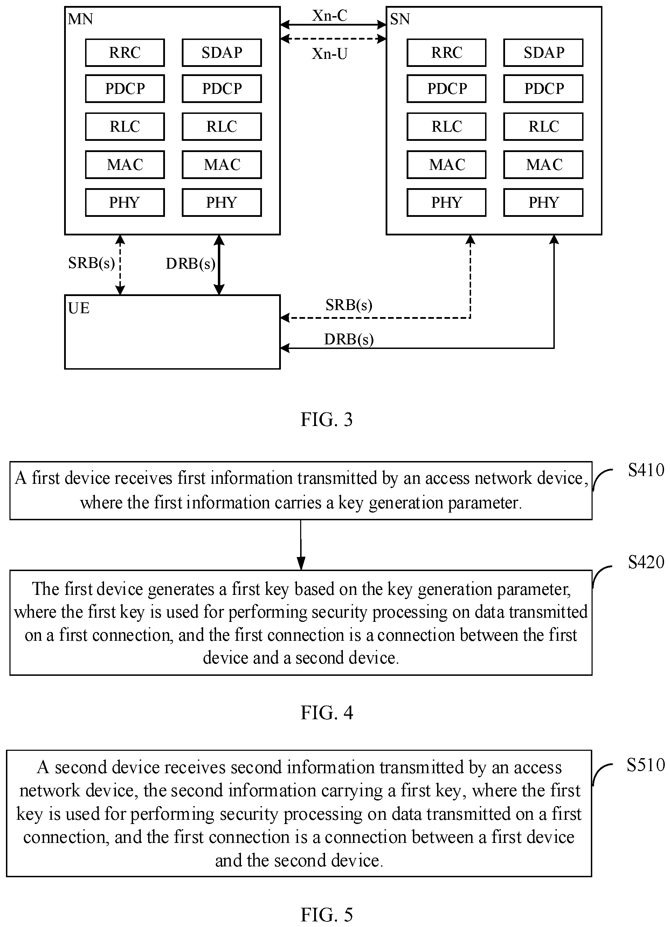

A 5G dual connectivity architecture is illustrated in conjunction with FIG. 3, where dual connectivity refers to that two base stations provide connectivity for the UE simultaneously; and the two base stations are the master node (MN) and the slave node (SN), respectively. As can be illustrated in FIG. 3 that the MN and SN perform transmission with the UE via signalling radio bearer(s) (SRB(s)) and data radio bearer(s) (DRB(s)), respectively; and both the MN and SN have protocol layers corresponding to the SRB(s) and DRB(s), respectively. As illustrated in FIG. 3, the protocol layers, in the MN or SN, corresponding to the SRB(s) include RRC, PDCP, RLC, MAC and RHY; and the protocol layers, in the MN or SN, corresponding to the DRB(s) include service data adaptation protocol (SDAP), PDCP, RLC, MAC and PHY. Furthermore, the MN interconnects with the SN through an Xn interface. As illustrated in FIG. 3, the Xn interface between the SN and MN includes an Xn control plane (Xn-C) interface and an Xn user plane (Xn-U) interface. The security mechanism of 5G dual connectivity technology is: when the MN establishes a security context between the SN and UE for the first time for an existing access stratum (AS) security context shared between the MN and UE, the MN generates a key (KSN) for the SN and transmits the key to the SN via the Xn-C interface; where the key generating manner may be that the MN associates a value of SN Counter (may be used as an input derived from the KSN) with the current AS security context, to obtain the key. When the MN needs to generate a new KSN, the MN transmits the value of the SN Counter to the UE via the RRC signaling path. In addition, the above KSN is further used for deriving an RRC key and an user plane (UP) key between the UE and SN.

It should be understood that, the terms "system" and "network" are often used interchangeably herein. Herein, the term "and/or" is only a description of an association relationship of associated objects, which indicates that three relationships may exist. For example, A and/or B may mean three cases where: A exists alone, both A and B exist, and B exists alone. In addition, the character "/" herein generally indicates that associated objects before and after "/" are in an "or" relationship.

It should be understood that, "indicate" mentioned in the embodiments of the present disclosure may be direct indication, may be an indirect indication, or may represent that there is an association relationship. For example, that A indicates B may mean that A directly indicates B, for example, B may be obtained by A; or it may mean that A indirectly indicates B, for example, A indicates C, and B may be obtained by C; or it may mean that there is an association relationship between A and B.

In the description of the embodiments of the present disclosure, the term "correspond" may mean a direct or indirect correspondence between the two, or an associated relationship between the two; or it may mean a relationship of indicating and being indicated, a relationship of configuring and being configured, or the like.

To facilitate understanding of the technical solutions in the embodiments of the present disclosure, related technologies in the embodiments of the present disclosure will be described below. The following related technologies may be, as optional solutions, arbitrarily combined with the technical solutions in the embodiments of the present disclosure, those combined solutions all belong to the protection scope of the embodiments of the present disclosure.

FIG. 4 is a schematic flowchart of a communication method in accordance with an embodiment of the present disclosure. The method includes at least part of following contents.

In S410, a first device receives first information transmitted by an access network device, where the first information carries a key generation parameter.

In S420, the first device generates a first key based on the key generation parameter, where the first key is used for performing security processing on data transmitted on a first connection, and the first connection is a connection between the first device and a second device.

FIG. 5 is a schematic flowchart of a communication method in accordance with another embodiment of the present disclosure. The method includes at least part of following contents.

In S510, a second device receives second information transmitted by an access network device, the second information carrying a first key, where the first key is used for performing security processing on data transmitted on a first connection, and the first connection is a connection between a first device and the second device.

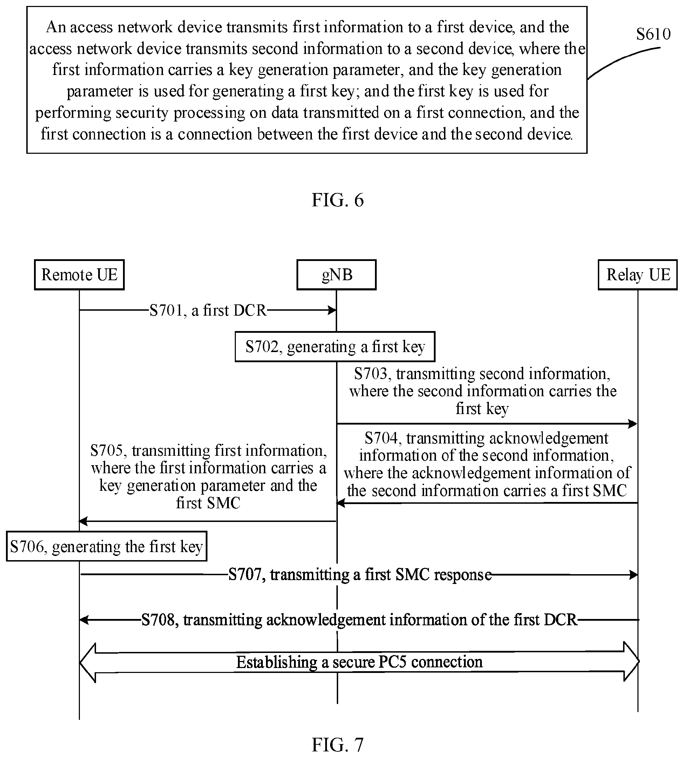

FIG. 6 is a schematic flowchart of a communication method in accordance with yet another embodiment of the present disclosure. The method includes at least part of following contents.

In S610, an access network device transmits first information to a first device, and the access network device transmits second information to a second device; where the first information carries a key generation parameter, and the key generation parameter is used for generating a first key; and the first key is used for performing security processing on data transmitted on a first connection, and the first connection is a connection between the first device and the second device.

Here, the first device is a remote terminal device; and the second device is a relay terminal device. The access network device may be any one of a base station, gNB, eNB, etc.

The operation of performing security processing on the data transmitted on the first connection refers to: performing security processing such as integrity protection and encryption on the data transmitted on the first connection. That is, according to the solutions provided by the embodiment, the access network device may transmit the key generation parameter to the first device, to enable the first device to generate the first key; and the access network device may also directly transmit the first key to the second device, to enable the secure first connection to be established successfully between the first device and the second device based on the first key.

In some possible implementations, the first device triggers to establish the first connection.

Before the first device receives the first information transmitted by the access network device, the method further includes that the first device transmits first request information to the access network device, where the first request information is used for requesting to establish the first connection.

Before the access network device transmits the first information to the first device and transmits the second information to the second device, the method further includes that the access network device receives the first request information transmitted by the first device, where the first request information is used for requesting to establish the first connection.

The first device may first decide whether to transmit the first request information, and may include that the first device transmits the first request information in a case where the first device determines that the first connection needs to be established based on the current state. For example, in a case where the current state is that the amount of data transmission of the first device is higher than a preset threshold value or the current state may be that the downlink signal strength between the first device and the access network device is less than a first strength threshold value, the first device determines that the first connection needs to be established. Where the preset threshold value may be set according to the actual situations and is not limited; the first strength threshold value may also be set according to the actual situations and is not limited; the downlink signal strength may be measured by the following contents such as a reference signal receiving power (RSRP) measurement result and/or reference signal receiving quality (RSRQ) measurement result. It should be understood that this is only the exemplary description, and in the actual processing, the first device may also adopt other ways to determine whether to transmit the first request information, which are not exhaustive herein.

Exemplarily, the first request information may be referred to as a first direct communication request (DCR). Optionally, the first request information may also be referred to as first MP trigger information.

Optionally, the first request information may carry relevant information of the second device, where the relevant information of the second device may specifically be identification information of the second device. The identification information of the second device may be a unique identifier of the second device. For example, the identification information of the second device may be any one of: a temporary mobile subscriber identity (TMSI) of the second device, an international mobile subscriber identity (IMSI) of the second device, or an inactive radio network temporary identifier (I-RNTI) of the second device. It should be understood that this is only an exemplary description, and the identification information of the second device may also be represented by other identities (IDs), which are not exhaustive herein.

When the first request information carries the relevant information of the second device, the first device needs to select or discover the second device before transmitting the first request information. Exemplarily, the manner in which the first device selects or discovers the second device by may include: Model A discovery procedure or Model B discovery procedure. Where Model A discovery procedure may be that: the first device receives announcement messages transmitted by a plurality of candidate devices, the announcement messages actively broadcast relay service codes (RSCs) that the plurality of candidate devices may provide relay services; and the first device may select a suitable device as the second device based on the RSCs included in the received announcement messages of the plurality of candidate devices. The model B discovery procedure may be that: the first device transmits a solicitation message, the solicitation message includes an RSC required by the first device itself; if there are candidate devices that can support the RSC around the first device, the candidate devices transmit response messages to the first device; and the first device may select a suitable device from the candidate devices that transmit the response messages as the second device.

After receiving the first request information, the access network device may transmit the first information to the first device and transmit the second information to the second device, respectively.

After the access network device receives the first request information transmitted by the first device, the method further includes that the access network device generates the first key. The operation that the access network device transmits the second information to the second device includes that the access network device transmits the second information to the second device in a case where the access network device generates the first key. Accordingly, the second device may receive the second information transmitted by the access network device.

Specifically, the operation that the access network device generates the first key may include that the access network device generates the first key based on the key generation parameter and a second key, where the second key is used for performing security processing on data transmitted on a second connection, and the second connection is the connection between the first device and the access network device.

The key generation parameter includes at least one of: relevant information of the second device, a first random number, a count value related to the first connection, relevant information of a radio bearer (RB) between the first device and the access network device, or a session identifier between the first device and the access network device.

The description of the relevant information of the second device is the same as that in the above embodiments, and therefore will not be repeated herein.

The first random number may be a first random number generated by the access network device, and the manner of generating the first random number is not limited in the present embodiment.

The count value related to the first connection may include at least one of: the number of times that the first connection is established between the access network device and the first device, the number of times of transmitting RRC messages when the first connection is established, the number of times that the access network device generates the key, the number of times of initiating SMC, or the like. All possible types of the count value related to the first connection are not exhaustive herein, and any count value that may be related to the first connection may be within the protection scope of the present embodiment.

The session identifier between the first device and the access network device may refer to a protocol data unit (PDU) session ID between the first device and the access network device.

The relevant information of the bearer between the first device and the access network device may include at least one of: an identifier of a DRB between the first device and the access network device; or an identifier of an SRB between the first device and the access network device.

Exemplarily, the operation of generating the first key based on the key generation parameter and the second key may be that the key generation parameter and the second key are calculated by adopting a preset key algorithm, to obtain the first key. The preset key algorithm may be a key derivation function (KDF), or may adopt other key algorithms, which is not exhaustive herein. For example, the above operation of generating the first key based on the key generation parameter and the second key may be expressed by the following formula: *K_{NR_Pro_MP}=KDF*(*K_{gNB},parameter)* ; where *K_{NR_Pro_MP}* represents the first key, *K_{gNB}* represents the second key, ***parameter*** represents the key generation parameter, and KDF() represents that the KDF algorithm is adopted.

As long as the timing at which the access network device transmits the first information to the first device is subsequent to the timing at which the access network device receives the first request information, it falls within the protection scope of the present embodiment.

Optionally, the operation that the access network device transmits the first information to the first device may include that the access network device transmits the first information to the first device after the access network device receives the first request information transmitted by the first device and before the first key is generated.

Optionally, the operation that the access network device transmits the first information to the first device may include that the access network device transmits the first information to the first device after the access network receives the first request information transmitted by the first device and after the first key is generated.

Optionally, the operation that the access network device transmits the first information to the first device may include that the access network device transmits the first information to the first device while the first key is generated.

Optionally, the operation that the access network device transmits the first information to the first device may include that the access network device transmits the first information to the first device in a case where the access network device receives acknowledgement information of the second information transmitted by the second device. That is, after receiving the first request information transmitted by the first device, generating the first key and transmitting the second information to the second device, the access network device transmits the first information to the first device in a case where the access network device receives the acknowledgement information of the second information transmitted by the second device.

When the first device transmits the first request information to the access network device, the first request information may be carried by a first RRC message. Here, the first RRC message may include one of: a first RRC connection setup message, a first RRC connection reestablishment message, a first RRC connection recovery message, or a first RRC connection reconfiguration message. In a preferred example, the first RRC message is a first RRC connection reconfiguration message.

The first information may be carried by a second RRC message. The second RRC message may be an RRC complete message corresponding to the first RRC message. For example, the second RRC message may include one of: a first RRC connection setup complete message, a first RRC connection reestablishment complete message, a first RRC connection recovery complete message, or a first RRC connection reconfiguration complete message. In a preferred example, the second RRC message is a first RRC connection reconfiguration complete message.

After receiving the first information, the first device may generate the first key based on the key generation parameter. The operation that the first device generates the first key based on the key generation parameter includes that the first device generates the first key based on the key generation parameter and a second key, where the second key is used for performing security processing on data transmitted on a second connection, and the second connection is a connection between the first device and the access network device. The processing manner by which the first device generates the first key based on the key generation parameter and the second key is the same as that by which the access network device generates the first key described above, and therefore, the description thereof will not be repeated.

It should be noted that after the first device transmits the first request information to the access network device and before the first device receives the first information transmitted by the access network device, the processing of the first device may further include that the first device establishes a sidelink connection with the second device. The manner in which the first device establishes the sidelink connection with the second device is not limited in the present embodiment.

The timing at which the access network device transmits the second information to the second device is subsequent to the timing at which the access network device generates the first key. More specifically, in a case where the access network device generates the first key, the operation that the access network device transmits the second information to the second device may include that the access network device transmits the second information to the second device in a case where the access network device generates the first key and the access network device establishes a secure connection of an Uu interface with the second device. The processing for the access network device to generate the first key and the processing for the access network device to establish the secure connection of the Uu interface with the second device may be in no particular order, which is not limited in the present embodiment. In addition, the processing manner for the access network device to establish the secure connection of the Uu interface with the second device is not limited in the present embodiment.

The second information may also carry the first request information, where the first request information is used for requesting to establish the first connection. That is, the access network device may forward the first request information transmitted by the first device to the second device.

It should be noted that in a case where the second device receives the second information transmitted by the access network device, the second device may also transmit the acknowledgement information of the second information to the access network device, and the acknowledgement information of the second information may be used for acknowledging that the first key is obtained.

The second information may be carried by a sixth RRC message. The sixth RRC message may include one of: a sixth RRC connection setup message, a sixth RRC connection reestablishment message, a sixth RRC connection recovery message, or a sixth RRC connection reconfiguration message. In a preferred example, the sixth RRC message is a sixth RRC connection reconfiguration message.

The acknowledgement information of the second information may be used for acknowledging that the second device has received the first key. The acknowledgement information of the second information may be carried by a seventh RRC message. The seventh RRC message may be a response message of the sixth RRC message. For example, the seventh RRC message may include one of: a sixth RRC connection setup complete message, a sixth RRC connection reestablishment complete message, a sixth RRC connection recovery complete message, or a sixth RRC connection reconfiguration complete message. In a preferred example, the seventh RRC message is a sixth RRC connection reconfiguration complete message.

Based on the above processing, both the first device and the second device may obtain the first key. Furthermore, the acknowledgement procedure of air interface encryption and integrity protection also needs to be performed between the first device and the second device.

In some possible implementations, in a scenario in which the first device triggers to establish the first connection, the second device may initiate the acknowledgement procedure for performing the encryption and integrity protection.

The timing at which the second device initiates the acknowledgement procedure for performing the encryption and integrity protection is subsequent to the timing at which the second device receives the second information transmitted by the access network device. The processing performed at the second device side may include the following operations.

After the second device receives the second information transmitted by the access network device, the method further includes that the second device transmits first indication information, where the first indication information is used for instructing to negotiate the first key with the first device; and that the second device receives first response information transmitted by the first device, where the first response information is used for acknowledging that the first key is generated.

Furthermore, the second information further carries first request information, and the first request information is used for requesting to establish the first connection. Accordingly, the method may further include that the second device transmits acknowledgement information of the first request information to the first device in a case where the second device receives the first response information transmitted by the first device, where the acknowledgement information of the first request information is used for acknowledging that the first connection is established securely and successfully.

The first indication information may carry identification information of the first key, and the identification information of the first key specifically refers to the ID of the first key. That is, after receiving the first key carried in the second information transmitted by the access network device, the second device carries the ID of the first key in the first indication information and transmits to the first device. It should also be noted that the first indication information is further used for instructing to negotiate other security parameters with the first device. Exemplarily, the first indication information may also carry relevant information of other security parameters, for example, which may include at least one of: relevant information of the second device, a first random number, a count value related to the first connection, relevant information of a radio bearer (RB) between the first device and the access network device or a session identifier between the first device and the access network device, which are not exhaustive herein. The first indication information may be a first security mode command (SMC).

The first response information is used for acknowledging that the first key is generated. The first response information may be used for acknowledging that other security parameters are the same as relevant information of the second device. The description of the security parameters is the same as that in the above embodiments, and therefore will not be repeated herein. The first response information may be a first SMC response. Exemplarily, after the first device generates the first key, if the ID of the first key generated by the first device is the same as the ID of the first key carried in the first indication information, the first device may transmit the first response information to the second device.

The description of the first request information is the same as that in the above embodiments, and therefore will not be repeated herein.

The acknowledgement information of the first request information is used for acknowledging that the first connection is established securely and successfully, which may specifically refer to acknowledging that establishment of a secure connection of a PC5 interface is completed (or succeeded) between the first device and the second device.

The operation that the second device transmits the first indication information may include one of:
that the second device transmits acknowledgement information of the second information to the access network device, where the acknowledgement information of the second information carries the first indication information;
that the second device transmits the first indication information to the access network device after the second device transmits acknowledgement information of the second information to the access network device; or
that the second device transmits the first indication information to the first device after the second device transmits acknowledgement information of the second information to the access network device.

That is, as long as the timing at which the second device transmits the first indication information is subsequent to the timing at which the second device receives the second information transmitted by the access network device, it falls within the protection scope of the present embodiment. The first indication information may be carried by the acknowledgement information of the second information, or may be transmitted separately.

The processing performed at the access network device side may include the following operations.

After the access network device transmits the second information to the second device, the method further includes that the access network device receives first indication information transmitted by the second device, where the first indication information is used for instructing to negotiate the first key with the first device.

The operation that the access network device receives the first indication information transmitted by the second device includes one of followings: that the access network device receives acknowledgement information of the second information transmitted by the second device, where the acknowledgement information of the second information carries the first indication information; or the access network device receives the first indication information transmitted by the second device after the access network device receives the acknowledgement information of the second information transmitted by the second device.

The manner in which the access network device transmits the first indication information to the first device may include that the access network device transmits the first indication information to the first device in a case where the access network device receives the first indication information transmitted by the second device.

Optionally, the access network device may carry the first indication information in the first information for transmission. Specifically, the operation that the access network device transmits the first information to the first device includes that the access network device transmits to the first device in a case where the access network device receives the first indication information transmitted by the second device, where the first information carries the first indication information.

That is, only when the access network device receives the first indication information transmitted by the second device, the access network device may transmit the first information to the first device, and the first information carries the first indication information. Optionally, the timing at which the access network device transmits the first information to the first device is different from the timing at which the access network device transmits the first indication information to the first device, that is, the two pieces of information are transmitted separately. In a preferred example of such situation, the access network device transmits the first information to the first device as long as the access network device receives the first request information; and the access network device transmits the first indication information to the first device again when receiving the first indication information transmitted by the second device.

The timing at which the first device transmits the first response information corresponding to the first indication information needs to be subsequent to the timing at which the first device generates the first key. The processing that may be performed by the first device may include the following operations.

The manner in which the first device receives the first indication information may include one of:
that the first device receives first indication information transmitted by the second device, where the first indication information is used for instructing to negotiate the first key with the first device; or
that the first device receives first indication information transmitted by the access network device.

Optionally, the first information further carries the first indication information; and the first indication information is used for instructing to negotiate the first key with the first device. That is, the first device may obtain the first indication information from the first information.

After the first device generates the first key based on the key generation parameter, the method further includes that the first device transmits first response information to the second device, where the first response information is used for acknowledging that the first key is generated; and that the first device receives acknowledgement information of the first request information transmitted by the second device, where the acknowledgement information of the first request information is used for acknowledging that the first connection is established securely and successfully.

The processing for the first device to trigger to establish the first connection and the processing for the second device to transmit the first indication information in the above implementations are described in detail below.

In an embodiment, the second device carries the first indication information in the acknowledgement information of the second information, and the first information carries the first indication information.

Specifically, the processing of the first device may include the following operations. The first device transmits the first request information to the access network device; the first device receives the first information transmitted by the access network device, where the first information carries the first indication information and the key generation parameter; the first device generates the first key based on the key generation parameter and the second key; the first device transmits the first response information to the second device; and the first device receives the acknowledgement information of the first request information transmitted by the second device.

The processing of the access network device may include the following operations. The access network device receives the first request information transmitted by the first device; the access network device generates the first key; transmits the second information to the second device in a case where the access network device generates the first key, where the second information carries the first key and the first request information; the access network device receives the acknowledgement information of the second information transmitted by the second device, where the acknowledgement information of the second information carries the first indication information; and the access network device transmits the first information to the first device in a case where the access network device receives the first indication information transmitted by the second device, where the first information carries the first indication information.

The processing of the second device may include the following operations. The second device receives the second information transmitted by the access network device, where the second information carries the first key and the first request information; the second device transmits the acknowledgement information of the second information to the access network device, where the acknowledgement information of the second information carries the first indication information; the second device receives the first response information transmitted by the first device, where the first response information is used for acknowledging that the first key is generated; and the second device transmits the acknowledgement information of the first request information to the first device, where the acknowledgement information of the first request information is used for acknowledging that the first connection is established securely and successfully.

The related descriptions of the first request information, the first information, the second information, the acknowledgement information of the second information, the first indication information, the first response information and the acknowledgement information of the first request information are the same as those in the above embodiments, and therefore will not be repeated herein.

In conjunction with FIG. 7, an exemplary description is provided by taking the first device as a remote UE, the second device as a relay UE, the access network device as a gNB, the first request information as a first DCR, the first indication information as a first SMC, and the first response information as a first SMC response as an example, specifically, which includes the following.

In S701, the remote UE transmits the first DCR to the gNB, where the first DCR is used for requesting to establish the first connection.

In S702, the gNB generates the first key. As long as the timing at which the gNB generates the first key is prior to the timing of S703, it falls within the protection scope of the present example.

In S703, the gNB transmits the second information to the relay UE, where the second information carries the first key.

Before S703 is performed, the secure connection of the Uu interface may be established firstly between the access network device and the second device.

In S704, the relay UE transmits the acknowledgement information of the second information to the gNB, where the acknowledgement information of the second information carries the first SMC.

In S705, the gNB transmits the first information to the remote UE, where the first information carries the key generation parameter and the first SMC.

In S706, the remote UE generates the first key based on the key generation parameter and the second key. As long as the timing at which the remote UE generates the first key based on the key generation parameter and the second key is prior to the timing of S707, it falls within the protection scope of the present example.

In S707, the remote UE transmits the first SMC response to the relay UE after generating the first key.

It should be noted that, before the S707, the establishment of the PC5 connection has been completed between the remote UE and the relay UE. Preferably, before the S705, the establishment of the PC5 connection has been completed between the remote UE and the relay UE.

In S708, the relay UE transmits the acknowledgement information of the first DCR to the remote UE, where the acknowledgement information of the first DCR is used for acknowledging that the first connection is established securely and successfully, that is, as illustrated in FIG. 7, the establishment of the secure PC5 connection has been completed between the relay UE and the remote UE.

It should be noted that the carrying manner of the first DCR, the second information, the acknowledgement information of the second information and the first information is the same as the carrying manner of those in the above embodiments, and thus carried messages of each kind of information are not described in detail in FIG. 7 for the sake of brevity.

In an embodiment, after the second device transmits the acknowledgement information of the second information to the access network device, the second device transmits the first indication information to the access network device.

Specifically, the processing of the first device may include the following operations. The first device transmits the first request information to the access network device; the first device receives the first information transmitted by the access network device, where the first information carries the key generation parameter; the first device generates the first key based on the key generation parameter and the second key; the first device receives the first indication information transmitted by the access network device; the first device transmits the first response information to the second device; and the first device receives the acknowledgement information of the first request information transmitted by the second device.

The processing of the access network device may include the following operations. The access network device receives the first request information transmitted by the first device; the access network device transmits the first information to the first device; the access network device generates the first key; the access network device transmits the second information to the second device in a case where the access network device generates the first key, where the second information carries the first key and the first request information; the access network device receives the first indication information transmitted by the second device after the access network device receives the acknowledgement information of the second information transmitted by the second device; and the access network device transmits the first indication information to the first device in a case where the access network device receives the first indication information transmitted by the second device.

The processing of the second device may include the following operations. The second device receives the second information transmitted by the access network device, where the second information carries the first key and the first request information; the second device transmits the first indication information to the access network device after the second device transmits the acknowledgement information of the second information to the access network device; the second device receives the first response information transmitted by the first device, where the first response information is used for acknowledging that the first key is generated; and the second device transmits the acknowledgement information of the first request information to the first device, where the acknowledgement information of the first request information is used for acknowledging that the first connection is established securely and successfully.

It should be noted that the timing at which the access network device transmits the first information to the first device may be any one of: prior to the timing at which the access network device generates the first key; simultaneous with the timing at which the access network device generates the first key; subsequent to the timing at which the access network device generates the first key; simultaneous with the timing at which the access network device transmits the second information to the second device; or subsequent to the timing at which the access network device transmits the second information to the second device.

As long as the timing at which the first device transmits the first response information is subsequent to the timing at which the first device generates the first key, it falls within the protection scope of the present embodiment.

As long as the timing at which the second device transmits the first indication information is subsequent to the timing at which the second information is received, it falls within the protection scope of the present embodiment.

The first indication information transmitted by the second device to the access network device may be carried by an eighth RRC message. The eighth RRC message may be any one of: an eighth RRC connection setup message, an eighth RRC connection reestablishment message, an eighth RRC connection recovery message, or an eighth RRC connection reconfiguration message. In a preferred example, the eighth RRC message is an eighth RRC connection reconfiguration message. The access network device may further transmit the acknowledgement reception information of the first indication information to the second device after receiving the first indication information transmitted by the second device, where the acknowledgement reception information of the first indication information may be carried by a ninth RRC message. The ninth RRC message may be any one of: a ninth RRC connection setup complete message, a ninth RRC connection reestablishment complete message, a ninth RRC connection recovery complete message, or a ninth RRC connection reconfiguration complete message.

The related descriptions of the first request information, the first information, the second information, the acknowledgement information of the second information, the first indication information, the first response information and the acknowledgement information of the first request information are the same as the descriptions of those in the above embodiments, and therefore will not be repeated herein.

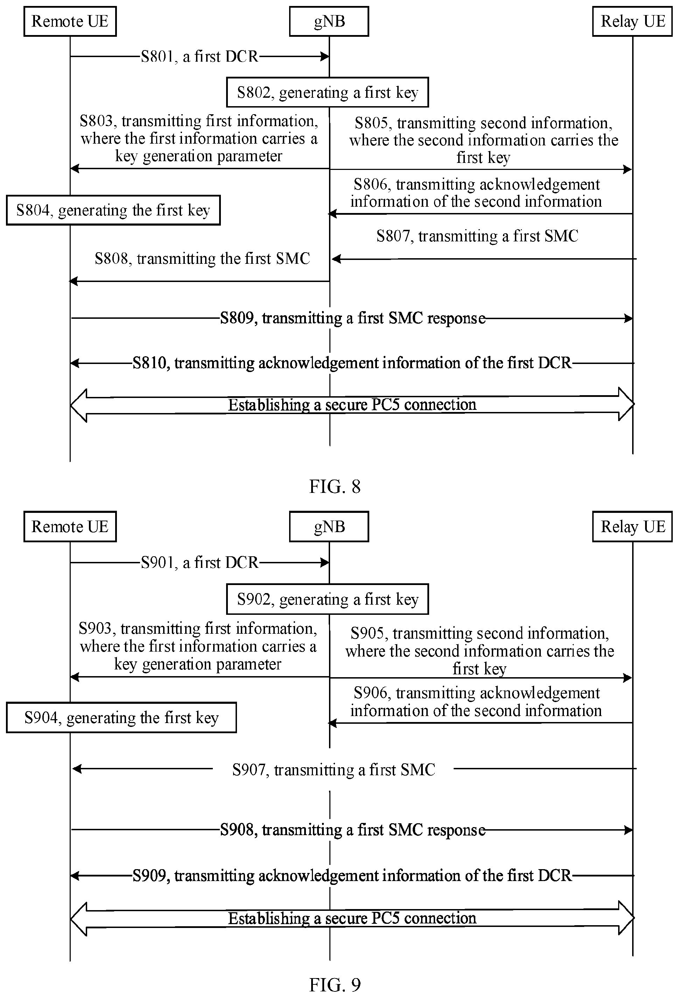

In conjunction with FIG. 8, an exemplary description is provided by taking the first device as a remote UE, the second device as a relay UE, the access network device as a gNB, the first request information as a first DCR, the first indication information as a first SMC, and the first response information as a first SMC response as an example, specifically, which includes the following.

In S801, the remote UE transmits the first DCR to the gNB, where the first DCR is used for requesting to establish the first connection.

In S802, the gNB generates the first key. As long as the timing at which the gNB generates the first key is prior to the timing of S805, it falls within the protection scope of the present example.

In S803, the gNB transmits the first information to the remote UE, where the first information carries the key generation parameter.

In S804, the remote UE generates the first key based on the key generation parameter and the second key.

It should be noted that the timing at which the remote UE generates the first key based on the key generation parameter and the second key may be any time that is subsequent to the timing of S803 and prior to the timing of S809, which is not limited in the present example.

In S805, the gNB transmits the second information to the relay UE, where the second information carries the first key.

The S803 and S805 may be in no particular order.

Exemplarily, before the S805 is performed, the secure connection of the Uu interface may be established firstly between the access network device and the second device. Before the S803, the establishment of the PC5 connection has been completed between the remote UE and the relay UE.

In S806, the relay UE transmits the acknowledgement information of the second information to the gNB, and the acknowledgement information of the second information.

In S807, the relay UE transmits the first SMC to the gNB.

Although not illustrated in FIG. 8, after the S807, the method may further include that the gNB transmits the acknowledgement reception information of the first SMC to the relay UE.

In S808, the gNB transmits the first SMC to the remote UE.

Although not illustrated in FIG. 8, after the S808, the method may further include that the remote UE transmits the acknowledgement reception information to the gNB.

In S809, the remote UE transmits the first SMC response to the relay UE after acknowledging that the first key is generated.

In S810, the relay UE transmits the acknowledgement information of the first DCR to the remote UE, where the acknowledgement information of the first DCR is used for acknowledging that the first connection is established securely and successfully, that is, as illustrated in FIG. 8, the establishment of the secure PC5 connection has been completed between the relay UE and the remote UE.

It should be noted that the carrying manner of the first DCR, the second information, the acknowledgement information of the second information and the first information is the same as the carrying manner of those in the above embodiments, and thus the carried messages of each kind of information are not described in detail in FIG. 8 for the sake of brevity.

In an embodiment, after the second device transmits the acknowledgement information of the second information to the access network device, the second device transmits the first indication information to the first device.

Specifically, the processing of the first device may include the following operations. The first device transmits the first request information to the access network device; the first device receives the first information transmitted by the access network device, where the first information carries the key generation parameter; the first device generates the first key based on the key generation parameter and the second key; the first device receives the first indication information transmitted by the second device; the first device transmits the first response information to the second device; and the first device receives the acknowledgement information of the first request information transmitted by the second device.

The processing of the access network device may include the following operations. The access network device receives the first request information transmitted by the first device; the access network device transmits the first information to the first device; the access network device generates the first key; the access network device transmits the second information to the second device in a case where the access network device generates the first key, where the second information carries the first key and the first request information; and the access network device receives the acknowledgement information of the second information transmitted by the second device.

The processing of the second device may include the following operations. The second device receives the second information transmitted by the access network device, where the second information carries the first key and the first request information; the second device transmits the first indication information to the first device after the second device transmits the acknowledgement information of the second information to the access network device; the second device receives the first response information transmitted by the first device, where the first response information is used for acknowledging that the first key is generated; and the second device transmits the acknowledgement information of the first request information to the first device, where the acknowledgement information of the first request information is used for acknowledging that the first connection is established securely and successfully.

It should be noted that the timing at which the access network device transmits the first information to the first device may be any one of: prior to the timing at which the access network device generates the first key; simultaneous with the timing at which the access network device generates the first key; subsequent to the timing at which the access network device generates the first key; simultaneous with the timing at which the access network device transmits the second information to the second device; or subsequent to the timing at which the access network device transmits the second information to the second device.

As long as the timing at which the first device transmits the first response information is subsequent to the timing at which the first device generates the first key, it falls within the protection scope of the present embodiment.

As long as the timing at which the second device transmits the first indication information is subsequent to the timing at which the second information is received, it falls within the protection scope of the present embodiment.

The first indication information may be carried by a sidelink message; similarly, the first response information may also be carried by a sidelink message. Exemplarily, the sidelink message may be a sidelink RRC message.

The related descriptions of the first request information, the first information, the second information, the acknowledgement information of the second information, the first indication information, the first response information and the acknowledgement information of the first request information are the same as the descriptions of those in the above embodiments, and therefore will not be repeated herein.

In conjunction with FIG. 9, an exemplary description is provided by taking the first device as a remote UE, the second device as a relay UE, the access network device as a gNB, the first request information as a first DCR, the first indication information as a first SMC, and the first response information as a first SMC response as an example, specifically, which includes the following.

In S901, the remote UE transmits the first DCR to the gNB, where the first DCR is used for requesting to establish the first connection.

In S902, the gNB generates the first key. As long as the timing at which the gNB generates the first key is prior to the timing of S905, it falls within the protection scope of the present example.

In S903, the gNB transmits the first information to the remote UE, where the first information carries the key generation parameter.

In S904, the remote UE generates the first key based on the key generation parameter and the second key.

It should be noted that the timing at which the remote UE generates the first key based on the key generation parameter and the second key may be any time that is subsequent to the timing of the S903 and prior to the timing of S909, which is not limited in the present example.

In S905, the gNB transmits the second information to the relay UE, where the second information carries the first key.

The S903 and S905 may be in no particular order.

Exemplarily, before S905 is performed, the secure connection of the Uu interface may be established firstly between the access network device and the second device. Before S903, the establishment of the PC5 connection has been completed between the remote UE and the relay UE.

In S906, the relay UE transmits the acknowledgement information of the second information to the gNB, and the acknowledgement information of the second information.

In S907, the relay UE transmits the first SMC to the remote UE.

In S908, the remote UE transmits the first SMC response to the relay UE after generating the first key.

In S909, the relay UE transmits the acknowledgement information of the first DCR to the remote UE, where the acknowledgement information of the first DCR is used for acknowledging that the first connection is established securely and successfully, that is, as illustrated in FIG. 9, the establishment of the secure PC5 connection has been completed between the relay UE and the remote UE.

It should be noted that the carrying manner of the first DCR, the second information, the acknowledgement information of the second information and the first information is the same as the carrying manner of those in the above embodiments, and thus carried messages of each kind of information are not described in detail in FIG. 9 for the sake of brevity.

In some possible implementations, in a scenario in which the first device triggers to establish the first connection, the first device may initiate the acknowledgement procedure for performing the air interface encryption and integrity protection.

The timing at which the first device initiates the acknowledgement procedure for performing the air interface encryption and integrity protection is subsequent to the timing at which the first device generates the first key. The processing performed at the first device side may include the following operations.

After the first device generates the first key based on the key generation parameter, the method further includes that the first device transmits second indication information to the second device, where the second indication information is used for instructing to negotiate the first key with the second device; and the first device receives second response information transmitted by the second device, where the second response information is used for acknowledging that the first key is obtained.

The second indication information may carry identification information of the first key, and the identification information of the first key may specifically refers to the ID of the first key. That is, after generating the first key, the first device carries the ID of the first key in the second indication information and transmits to the second device. It should also be noted that the second indication information is further used for instructing to negotiate other security parameters with the second device. The description of other security parameters is the same as that in the above embodiments, and therefore will not be repeated. The second indication information may be the second SMC.

The second response information is used for acknowledging that the first key is obtained. The second response information may further be used for acknowledging that other security parameters are obtained. The second response information may be a second SMC response. Exemplarily, after the second device receives the first key carried in the second information transmitted by the access network device, if the ID of the first key obtained is the same as the ID of the first key carried in the second indication information, the second device may transmit the second response information to the first device.

Optionally, the second response information is further used for acknowledging that the first connection is established securely and successfully. Specifically, the second response information may carry acknowledgement information of the first request information, and the acknowledgement information of the first request information is used for acknowledging that the first connection is established securely and successfully.

Optionally, after the first device receives the second response information transmitted by the second device, the method further includes that the first device receives the acknowledgement information of the first request information transmitted by the second device, where the acknowledgement information of the first request information is used for acknowledging that the first connection is established securely and successfully.

The timing at which the second device transmits the second response information corresponding to the second indication information needs to be subsequent to the timing at which the second device receives the first key carried in the second information transmitted by the access network device. The processing that may be performed by the second device may include the following operations.

The method further includes that the second device receives the second indication information transmitted by the first device, where the second indication information is used for instructing to negotiate the first key with the second device. After the second device receives the second information transmitted by the access network device, the method further includes that the second device transmits the second response information to the first device, where the second response information is used for acknowledging that the first key is obtained.

Optionally, the second information further carries the first request information, where the first request information is used for requesting to establish the first connection. The method further includes that the second device transmits the acknowledgement information of the first request information to the first device in a case where the second device transmits the second response information to the first device, where the acknowledgement information of the first request information is used for acknowledging that the first connection is established securely and successfully.

Optionally, the second information further carries the first request information, the first request information is used for requesting to establish the first connection; and the second response information is further used for acknowledging that the first connection is established securely and successfully. Specifically, the second response information may carry the acknowledgement information of the first request information, that is, the second response information is used not only for acknowledging that the first key is obtained, but also for acknowledging that the establishment of the secure connection between the first device and the second device has been completed.

That is, the second device may directly acknowledge the first request information through the second response information, so that the first device acknowledges that the establishment of the secure connection of the PC5 interface between the first device and the second device has been completed. Optionally, after completing the transmission of the second response information, the second device may further transmit the acknowledgement information of the first request information to the first device, to enable the first device to acknowledge that the establishment of the secure connection of the PC5 interface between the first device and the second device has been completed.

The processing of the second device, the first device and the access network device in the above implementation manners is described in detail below.

In an embodiment, the processing of the first device may include the following operations. The first device transmits the first request information to the access network device; the first device receives the first information transmitted by the access network device, where the first information carries the key generation parameter; the first device generates the first key based on the key generation parameter and the second key; the first device transmits the second indication information to the access network device; and the first device receives the second response information transmitted by the second device, where the second response information is used for acknowledging that the first key is obtained, and the second response information may further be used for acknowledging that the establishment of the first connection is completed.

The processing of the access network device may include the following operations. The access network device receives the first request information transmitted by the first device; the access network device transmits the first information to the first device, where the first information carries the key generation parameter; the access network device generates the first key; and the access network device transmits the second information to the second device, where the second information carries the first key.

The processing of the second device may include the following operations. The second device receives the second information transmitted by the access network device, where the second information carries the first key; the second device transmits the acknowledgement information of the second information to the access network device; the second device receives the second indication information transmitted by the first device, where the second indication information is used for instructing to negotiate the first key with the second device; and the second device transmits the second response information to the first device in a case where the second device determines that the first key is received, where the second response information is used for acknowledging that the first key is obtained, and the second response information is further used for acknowledging that the establishment of the first connection is completed.

The related descriptions of the first request information, the first information, the second information, the acknowledgement information of the second information, the second indication information, the second response information and the acknowledgement information of the first request information are the same as the descriptions of those in the above embodiments and are not repeated for description.

It should be understood that the above is merely the exemplary description, and in the actual processing, after generating the first key, the first device may further transmit the second indication information to the second device through the access network device. Optionally, after generating the first key, the first device may transmit the second indication information to the access network device; the access network device transmits the second information to the second device in a case where the access network device receives the second indication information, where the second information carries the second indication information and the first key; and then the second device directly transmits the second response information to the first device. As long as the transmission timing of the second indication information is subsequent to the timing at which the first device generates the first key, it falls within the protection scope of the present embodiment, and the present embodiment is not exhaustive of all possibilities.

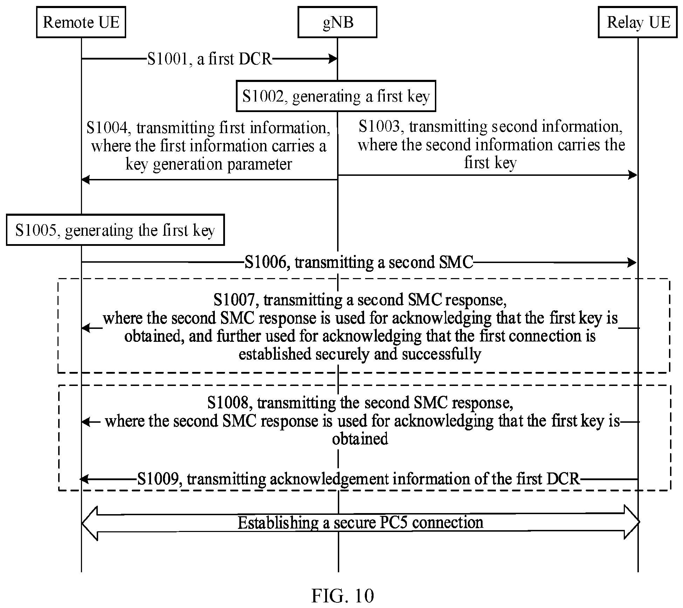

In conjunction with FIG. 10, an exemplary description is provided by taking the first device as a remote UE, the second device as a relay UE, the access network device as a gNB, the first request information as a first DCR, the second indication information as a second SMC, and the second response information as a second SMC response as an example, specifically, which includes the following.

In S1001, the remote UE transmits the first DCR to the gNB, where the first DCR is used for requesting to establish the first connection.

In S1002, the gNB generates the first key. As long as the timing at which the gNB generates the first key is prior to the timing of S1003, it falls within the protection scope of the present example.

In S1003, the gNB transmits the second information to the relay UE, where the second information carries the first key.

Before the S1003 is performed, the secure connection of the Uu interface may be established firstly between the access network device and the second device.

In addition, although not illustrated in FIG. 10, after S1003 is completed, the remote UE may further transmit the acknowledgement information of the second information to the relay UE, where the acknowledgement information of the second information may be carried by the third RRC connection reconfiguration complete message.

In S1004, the gNB transmits the first information to the remote UE, where the first information carries the key generation parameter.

The particular order of the S1004 and S1003 is not limited in the present embodiment. Before the S1004 is performed, the establishment of the PC5 connection has been completed between the remote UE and the relay UE.

In S1005, the remote UE generates the first key based on key generation parameter and the second key.

In S1006, the remote UE transmits the second SMC to the relay UE.

After the S1006 is completed, S1007 may be performed or S1008 to S1009 may be performed, which will be described below, respectively.

In S1007, the relay UE transmits the second SMC response to the remote UE, where the second SMC response is used for acknowledging that the first key is obtained and also used for acknowledging that the first connection is established securely and successfully, specifically, used for acknowledging that the establishment of the secure PC5 connection has been completed.

In S1008, the relay UE transmits the second SMC response to the remote UE, where the second SMC response is used for acknowledging that the first key is obtained.

In S1009, the relay UE transmits the acknowledgement information of the first DCR to the remote UE, where the acknowledgement information of the first DCR is the same as that in the above example and is not repeated for description.

It should be noted that the carrying manner of the first DCR, the second information, the acknowledgement information of the second information, and the first information are the same as the carrying manner of those in the above embodiments, and thus carried messages of each kind of information are not described in detail in FIG. 8 for the sake of brevity.

In some possible implementations, the access network device triggers to establish the first connection.

In such implementation, the access network device may transmit the second request information while transmitting the first information. That is, the first information further carries the second request information, and the second request information is used for requesting to establish the first connection.

The access network device may first decide whether to transmit the second request information, and may include that the access network device transmits the second request information in a case where the access network device determines that the first connection needs to be established based on the current state of the first device. For example, in a case where the current state of the first device is that the amount of data transmission of the first device is higher than a preset threshold value or the current state may be that the uplink signal strength between the first device and the access network device is less than a second strength threshold value, it is determined that the first connection needs to be established. Where the preset threshold value may be set according to the actual situations and is not limited; and the second strength threshold value may also be set according to the actual situations and is not limited. It should be understood that this is only the exemplary description, and in the actual processing, the access network device may also adopt other ways to determine whether to transmit the first request information, which are not exhaustive herein.

When the access network device transmits the first information, the first information may be carried by a third RRC message. Herein, the third RRC message may include one of: a third RRC connection setup message, a third RRC connection reestablishment message, a first RRC connection recovery message, or a third RRC connection reconfiguration message. In a preferred example, the third RRC message is a third RRC connection reconfiguration message.

Exemplarily, the second request information may be referred to as second MP trigger information.

Optionally, the first information may further carry relevant information of the second device. The description of the relevant information of the second device is the same as that in the above embodiments, and therefore will not be repeated for description.

When the first information carries the relevant information of the second device, the access network device needs to select or discover the second device before transmitting the first information. Exemplarily, the first device may first select or discover one or more candidate devices, and transmit the identifiers of the one or more candidate devices to the access network device, and the access network device determines the second device. Exemplarily, the first device may first select or discover one or more candidate devices, and transmit the identifiers of the one or more candidate devices to the access network device; and the access network device receives the one or more candidate devices reported by the first device, and then determines the second device from the one or more candidate devices based on the geographic locations of the candidate devices and the geographic location of the first device. Where, the access network device may select a candidate device whose distance from the first device meets the requirement as the second device. The requirement may be set according to the actual conditions, for example, which may be less than a specified distance, and the specified distance is not limited in the present embodiment.

Before the access network device transmits the second information to the second device, the method further includes that the access network device generates the first key. That is, after transmitting the first information to the first device and before transmitting the second information to the second device, the access network device needs to generate the first key.

The manner for the access network device to generate the first key is the same as that in the above embodiments and will not be described in detail. As long as the timing at which the access network device generates the first key is prior to the timing at which the access network device transmits the second information to the second device, it falls within the protection scope of the present embodiment. For example, the access network device may generate the first key before transmitting the first information; or the access network device may generate the first key after transmitting the first information and before transmitting the second information to the second device. This is only the exemplary description and is not intended to limit the timing of the access network device generating the first key. More specifically, in a case where the access network device generates the first key and the secure connection of the Uu interface is established between the access network and the second device, the access network device transmits the second information to the second device. The processing for the access network device to generate the first key and the processing for the access network device to establish the secure connection of the Uu interface with the second device may be in no particular order, which is not limited in the present embodiment. In addition, the processing manner for the access network device to establish the secure connection of the Uu interface with the second device is not limited in the present embodiment.

It should be noted that, in a case where the second device receives the second information transmitted by the access network device, the second device may further transmit the acknowledgement information of the second information to the access network device. Accordingly, after the access network device transmits the second information to the second device, the access network device may further receive the acknowledgement information of the second information transmitted by the second device, where the acknowledgement information of the second information is used for acknowledging that the first key is received. The carried messages of the second information and the carried messages of the acknowledgement information of the second information are the same as those in the above embodiments, and therefore will not be repeated for description.

After receiving the first information, the first device may generate the first key based on the key generation parameter. The processing for the first device to generate the first key based on the key generation parameter is the same as that in the above embodiment, and therefore will not be repeated for description. It should be noted that after the first device receives the first information, the method may also include that the first device establishes a sidelink connection with the second device. The manner for the first device to establish the sidelink connection with the second device is not limited in the present embodiment.

Based on the above processing, both the first device and the second device may obtain the first key. Furthermore, the acknowledgement procedure of air interface encryption and integrity protection also needs to be performed between the first device and the second device.

In some possible implementations, in a scenario in which the access network device triggers to establish the first connection, the second device may initiate the acknowledgement procedure for performing the air interface encryption and integrity protection.

The timing at which the second device initiates the acknowledgement procedure for performing the air interface encryption and integrity protection is subsequent to the timing at which the second device receives the second information transmitted by the access network device. The processing performed at the second device side may include the following operations.

After the second device receives the second information transmitted by the access network device, the method further includes that the second device transmits the first indication information, where the first indication information is used for instructing to negotiate the first key with the first device; and that the second device receives the first response information transmitted by the first device, where the first response information is used for acknowledging that the first key is generated.

The operation that the second device transmits the first indication information includes that the second device transmits the first indication information to the first device.

The related descriptions on the content of the first indication information and the first response information are the same as the description of those in the above embodiments, and therefore will not be repeated for description.

The timing at which the first device transmits the first response information corresponding to the first indication information needs to be subsequent to the timing at which the first device generates the first key. The processing that may be performed by the first device may include the following operations.

The manner in which the first device receives the first indication information may include that the first device receives the first indication information transmitted by the second device, where the first indication information is used for instructing to negotiate the first key with the first device. After the first device generates the first key based on the key generation parameter, the method further includes that the first device transmits the first response information to the second device, where the first response information is used for acknowledging that the first key is generated; and that the first device transmits the first acknowledgement information of the second request information to the access network device, where the first acknowledgement information of the second request information is used for acknowledging that the first connection is established securely and successfully.

The processing of the access network device may include the following operations. The access network device receives the first acknowledgement information of the second request information transmitted by the first device, where the first acknowledgement information of the second request information is used for acknowledging that the first connection is established securely and successfully.

The first acknowledgement information of the second request information is carried by a fourth RRC message. Herein, the fourth RRC message may correspond to the third RRC message carrying the first information. For example, the fourth RRC message may include one of: a third RRC connection setup complete message, a third RRC connection reestablishment complete message, a first RRC connection recovery complete message, or a third RRC connection reconfiguration complete message. In a preferred example, the fourth RRC message is a third RRC connection reconfiguration complete message.

The processing for the access network device to trigger to establish the first connection and the processing for the second device to transmit the first indication information in the above implementations are described in detail below.

In an embodiment, the access network device triggers to establish the first connection, and the second device initiates the acknowledgement procedure for performing the air interface encryption and integrity protection.

Specifically, the processing of the access network device may include the following operations. The access network device transmits the first information to the first device, where the first information carries the second request information and the key generation parameter; the access network device generates the first key; the access network device transmits the second information to the second device in a case where the first key is generated, where the second information carries the first key; the access network device receives the acknowledgement information of the second information transmitted by the second device; and the access network device receives the first acknowledgement information of the second request information transmitted by the first device, where the first acknowledgement information of the second request information is used for acknowledging that the first connection is established securely and successfully.

The processing of the first device may include the following operations. The first device receives the first information transmitted by the access network device, where the first information carries the second request information and the key generation parameter; the first device generates the first key based on the key generation parameter and the second key; the first device receives the first indication information transmitted by the second device, where the first indication information is used for instructing to negotiate the first key with the first device; the first device transmits the first response information to the second device in a case where it is determined that the first key is generated, where the first response information is used for acknowledging that the first key is generated; and the first device transmits the first acknowledgement information of the second request information to the access network device, where the first acknowledgement information of the second request information is used for acknowledging that the first connection is established securely and successfully.

The processing of the second device may include the following operations. The second device receives the second information transmitted by the access network device, where the second information carries the first key; the second device transmits the first indication information to the first device, where the first indication information is used for instructing to negotiate the first key with the first device; and the second device receives the first response information transmitted by the first device, where the first response information is used for acknowledging that the first key is generated.

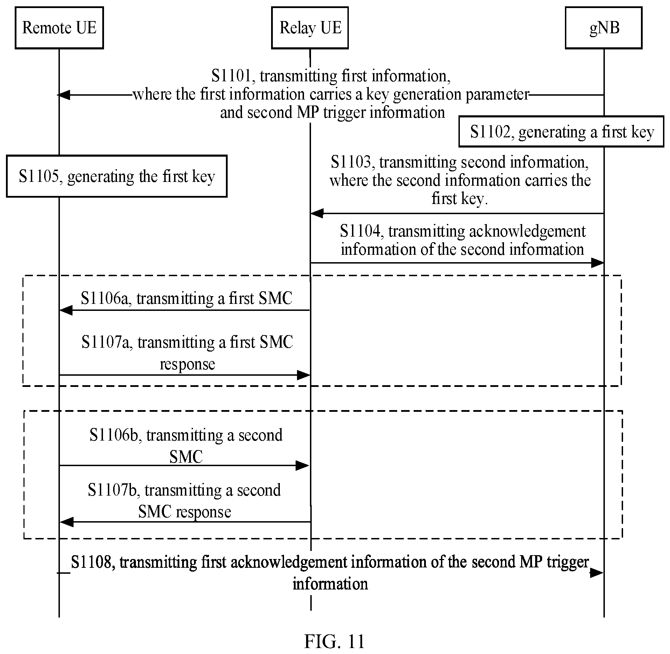

In conjunction with FIG. 11, an exemplary description is provided by taking the first device as a remote UE, the second device as a relay UE, the access network device as a gNB, the second request information as second MP trigger information, the first indication information as a first SMC, and the first response information as a first SMC response as an example, specifically, which includes the following.

In S1101, the gNB transmits the first information to the remote UE, where the first information carries the key generation parameter and the second MP trigger information, and the second MP trigger information is used for requesting to establish the first connection.

In S1102, the gNB generates the first key.

Here, the timing at which the gNB generates the first key may be prior to the timing of the S1101, or may also be time that is subsequent to the timing of the S 1101 and prior to the timing of S1103, which is not limited in the present embodiment.

In S1103, the gNB transmits the second information to the relay UE, where the second information carries the first key.

Before the S1103 is performed, the secure connection of the Uu interface may be established firstly between the access network device and the second device.

In S1104, the relay UE transmits the acknowledgement information of the second information to the gNB.

In S1105, the remote UE generates the first key based on the key generation parameter and the second key.

Here, the S1105 may be performed at any time after the S1101. As long as the processing of the S1105 is completed prior to transmitting the first response information (i.e., the first SMC response), it falls within the protection scope of the present embodiment; or as long as the processing of the S1105 is completed prior to transmitting the second indication information (i.e., the second SMC), it falls within the protection scope of the present embodiment, which are not limited herein.

Detailed description is provided below in conjunction with the procedure a in FIG. 11.

In S1106a, the relay UE transmits the first SMC to the remote UE.

In S1107a, the remote UE transmits the first SMC response to the relay UE.

It should be noted that, before the S1106a, the establishment of the PC5 connection has been completed between the remote UE and the relay UE. Preferably, before the S1105, the establishment of the PC5 connection has been completed between the remote UE and the relay UE.

In S1108, the remote UE transmits the first acknowledgement information of the second MP trigger information to the gNB, where the first acknowledgement information of the second MP trigger information is used for acknowledging that the first connection is established securely and successfully.

In some possible implementations, in a scenario in which the access network device triggers to establish the first connection, the first device may initiate the acknowledgement procedure for performing the air interface encryption and integrity protection.

The timing at which the first device initiates the acknowledgement procedure for performing the air interface encryption and integrity protection is subsequent to the timing at which the first device generates the first key. The processing performed at the first device side may include the following operations.

Optionally, after the first device generates the first key based on the key generation parameter, the method further includes that the first device transmits the second indication information to the second device, where the second indication information is used for instructing to negotiate the first key with the second device; that the first device receives the second response information transmitted by the second device, where the second response information is used for acknowledging that the first key is obtained; and that the first device transmits the first acknowledgement information of the second request information to the access network device, where the first acknowledgement information of the second request information is used for acknowledging that the first connection is established securely and successfully.

Optionally, after the first device generates the first key based on the key generation parameter, the method further includes that the first device transmits the second indication information to the second device, where the second indication information is used for instructing to negotiate the first key with the second device; and that the first device receives the second response information transmitted by the second device, where the second response information is used for acknowledging that the first key is obtained, and the second response information is further used for acknowledging that the first connection is established securely and successfully.

The difference between the two schemes is that, in one case, the second response information may be used for acknowledging that the first connection is established securely and successfully, that is, the second response information may carry the first acknowledgement information of the second request information. In another case, the second response information and the first acknowledgement information of the second request information are transmitted by two pieces of signaling, respectively.

Furthermore, before the first device generates the first key based on the key generation parameter, the method further includes that the first device transmits second acknowledgement information of the second request information to the access network device, where the second acknowledgement information of the second request information is used for acknowledging that establishment of the first connection with the second device is completed, and the second acknowledgement information of the second request information is carried by a fifth RRC message.

Optionally, the second indication information further carries the second acknowledgement information of the second request information; and the second acknowledgement information of the second request information is used for acknowledging that establishment of the first connection with the second device is completed.

That is, after the first device receives the first information carrying the second request information transmitted by the access network device, the first device may further transmit the second acknowledgement information of the second request information to the access network device, to enable the access network device to acknowledge that the first device and the second device have a sidelink connection. The second acknowledgement information of the second request information may be carried by the second indication information, or may be transmitted separately from the second indication information by different pieces of signaling.

The timing at which the second device transmits the second response information corresponding to the second indication information needs to be subsequent to the timing at which the second device receives the first key carried in the second information transmitted by the access network device. The processing that may be performed by the second device may include the following operations.

The method further includes that the second device receives the second indication information transmitted by the first device, where the second indication information is used for instructing to negotiate the first key with the second device. After the second device receives the second information transmitted by the access network device, the method further includes that the second device transmits the second response information to the first device, where the second response information is used for acknowledging that the first key is obtained.

Optionally, the operation that the second device receives the second information transmitted by the access network device may include that the second device transmits key request information to the access network device in a case where the second device receives the second indication information transmitted by the first device; and that the second device receives the second information transmitted by the access network device.

The second indication information further carries the second acknowledgement information of the second request information, the second acknowledgement information of the second request information is used for acknowledging that establishment of the first connection is completed, and the key request information carries the second acknowledgement information of the second request information.

Optionally, the timing at which the second device receives the second information transmitted by the access network device may be prior to or subsequent to the timing at which the second device receives the second indication information transmitted by the first device.

The processing of the access network device may further include that operation that the access network device transmits the first information to the first device and the access network device transmits the second information to the second device, in which the operation includes that the access network device transmits the first information to the first device; that the access network device receives the key request information transmitted by the second device; and that the access network device transmits the second information to the second device.

That is, the access network device may remain in a waiting state after transmitting the first information, and transmits the second information to the second device only when the access network device receives the key request information transmitted by the second device. It should be understood that, in such situation, as long as the timing at which the access network device generates the first key is prior to the timing at which the access network device transmits the second information to the second device, it falls within the protection scope of the present embodiment. In a possible example, in a case where the access network device receives the key request information transmitted by the second device, the access network device generates the first key; and then the access network device transmits the second information to the second device.

Optionally, the key request information carries second acknowledgement information of the second request information; and the second acknowledgement information of the second request information is used for acknowledging that establishment of the first connection with the second device is completed.

Optionally, before the access network device receives the key request information transmitted by the second device, the method further includes that the access network device receives second acknowledgement information of the second request information transmitted by the first device, where the second acknowledgement information of the second request information is used for acknowledging that establishment of the first connection with the second device is completed.

In such situation, after receiving the second acknowledgement information of the second request information, the access network device waits to receive the key request information transmitted by the second device. The access network device may generate the first key before transmitting the second information to the second device. For example, the access network device may generate the first key when receiving the key request information, and then transmit the second information to the second device. For example, the access network device may generate the first key before transmitting the first information, and transmit the second information to the second device when receiving the key request information. It should be understood that this is merely the exemplary description and is not intended to limit the timing at which the access network device generates the first key.

The processing for the access network device to trigger to establish the first connection and the processing for the second device to transmit the first indication information in the above implementations are described in detail below.

In an embodiment, the access network device triggers to establish the first connection, and the first device initiates the acknowledgement procedure for performing the air interface encryption and integrity protection.

Specifically, the processing of the access network device may include the following operations. The access network device transmits the first information to the first device, where the first information carries the second request information and the key generation parameter; the access network device generates the first key; the access network device transmits the second information to the second device in a case where the first key is generated, where the second information carries the first key; the access network device receives the acknowledgement information of the second information transmitted by the second device; and the access network device receives the first acknowledgement information of the second request information transmitted by the first device.

The processing of the first device may include the following operations. The first device receives the first information transmitted by the access network device, where the first information carries the second request information and the key generation parameter; the first device generates the first key based on the key generation parameter and the second key; the first device transmits the second indication information to the second device in a case where it is determined that the first key is generated; the first device receives the second response information transmitted by the second device; and the first device transmits the first acknowledgement information of the second request information to the access network device, where the first acknowledgement information of the second request information is used for acknowledging that the first connection is established securely and successfully.

The processing of the second device may include the following operations. The second device receives the second information transmitted by the access network device, where the second information carries the first key; the second device receives the second indication information transmitted by the first device; and the second device transmits the second response information to the first device.

In the present embodiment, in addition to being used for acknowledging that the first key is obtained, the second response information may further be used for acknowledging that the first connection is established securely and successfully, that is, the second response information may carry the first acknowledgement information of the second request information. In such situation, the first device may not need to perform the processing of transmitting the first acknowledgement information of the second request information to the access network device, or the first device may also perform the processing of transmitting the first acknowledgement information of the second request information to the access network device, which all fall within the protection scope of the present embodiment and will not be repeated for description.

In conjunction with procedure b of FIG. 11, an exemplary description is provided by taking the first device as a remote UE, the second device as a relay UE, the access network device as a gNB, the second request information as second MP trigger information, the second indication information as a second SMC, and the second response information as a second SMC response as an example, specifically, which includes the following.

In S1106b, the remote UE transmits the second SMC to the relay UE.

In S1107b, the relay UE transmits the second SMC response to the remote UE.

It should be noted that, before the S1106b, the establishment of the PC5 connection has been completed between the remote UE and the relay UE.

In such example, the description of the S1101 to S1105 and S1108 is the same as that of those in the above embodiment, and thus the description will not be repeated herein.

It should also be understood that if the second SMC response is further used for acknowledging that the first connection is established securely and successfully, the S1108 may not be performed and is not illustrated in FIG. 11 for the sake of brevity. It should be noted that the carrying manner of the first information, second information, and acknowledgement information of the second information is the same as the carrying manner of those in the above embodiments, and thus carried messages of each kind of information are not described in detail in FIG. 11 for the sake of brevity.

In an embodiment, the access network device triggers to establish the first connection, and the first device initiates initiate the acknowledgement procedure for performing the air interface encryption and integrity protection.

Specifically, the processing of the access network device may include the following operations. The access network device transmits the first information to the first device, where the first information carries the second request information and the key generation parameter; the access network device receives the key request information transmitted by the second device, where the key request information carries the second acknowledgement information of the second request information, and the second acknowledgement information of the second request information is used for acknowledging that establishment of the first connection with the second device is completed; the access network device generates the first key; and the access network device transmits the second information to the second device in a case where the first key is generated, where the second information carries the first key.

The processing of the first device may include the following operations. The first device receives the first information transmitted by the access network device, where the first information carries the second request information and the key generation parameter; the first device generates the first key based on the key generation parameter and the second key; the first device transmits the second indication information to the second device in a case where it is determined that the first key is generated, where the second indication information further carries the second acknowledgement information of the second request information, and the second acknowledgement information of the second request information is used for acknowledging that establishment of the first connection with the second device is completed; and the first device receives the second response information transmitted by the second device, where the second response information is used for acknowledging that the first key is obtained, and the second response information is further used for acknowledging that the first connection is established securely and successfully.

The processing of the second device may include the following operations. The second device receives the second indication information transmitted by the first device; the second device transmits the key request information to the access network device in a case where the second device receives the second indication information transmitted by the first device, where the key request information carries the second acknowledgement information of the second request information; the second device receives the second information transmitted by the access network device; and the second device transmits the second response information to the first device.

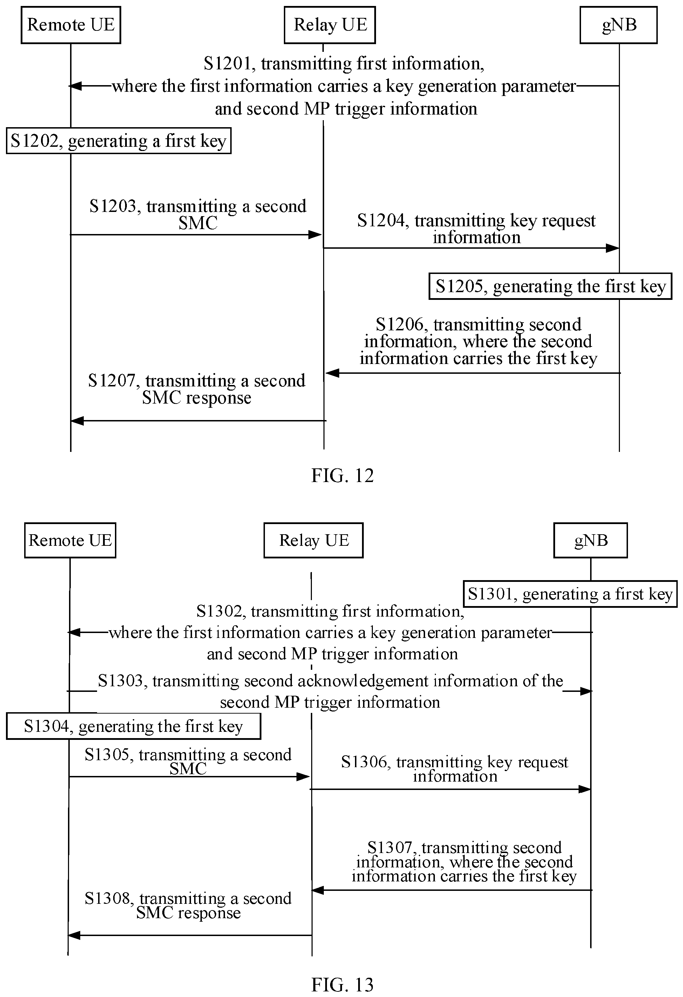

In conjunction with FIG. 12, an exemplary description is provided by taking the first device as a remote UE, the second device as a relay UE, the access network device as a gNB, the second request information as second MP trigger information, the second indication information as a second SMC, and the second response information as a second SMC response as an example, specifically, which includes the following.

In S1201, the gNB transmits the first information to the remote UE, where the first information carries the key generation parameter and second MP trigger information, and the second MP trigger information is used for requesting to establish the first connection.

In S1202, the remote UE generates the first key based on the key generation parameter.

In S1203, the remote UE transmits the second SMC to the relay UE, where the second SMC carries the second acknowledgement information of the second MP trigger information.

Before the S1203, the remote UE needs to complete the establishment of the PC5 connection with the relay UE.

In S1204, the relay UE transmits the key request information to the gNB, where the key request information carries the second acknowledgement information of the second MP trigger information.

In S1205, the gNB generates the first key. As long as the timing at which the gNB generates the first key is any timing prior to the timing of the S1206, it falls within the protection scope of the present embodiment.

In S1206, the gNB transmits the second information to the relay UE, where the second information carries the first key.

Before the S1206 is performed, the secure connection of the Uu interface may be established firstly between the access network device and the second device.

In S1207, the relay UE transmits the second SMC response to the remote UE, where the second SMC response is used for acknowledging that the first key is obtained, and further used for acknowledging that the first connection is established securely and successfully.

In an embodiment, the access network device triggers to establish the first connection, and the first device initiates the acknowledgement procedure for performing the air interface encryption and integrity protection.

Specifically, the processing of the access network device may include the following operations. The access network device transmits the first information to the first device, where the first information carries the second request information and the key generation parameter; the access network device receives the second acknowledgement information of the second request information transmitted by the first device, where the second acknowledgement information of the second request information is used for acknowledging that establishment of the first connection with the second device is completed; the access network device receives the key request information transmitted by the second device, where the key request information carries the second acknowledgement information of the second request information; the access network device generates the first key; and the access network device transmits the second information to the second device in a case where the first key is generated, where the second information carries the first key.

The processing of the first device may include the following operations. The first device receives the first information transmitted by the access network device, where the first information carries the second request information and the key generation parameter; the first device transmits the second acknowledgement information of the second request information to the access network device, where the second acknowledgement information of the second request information is used for acknowledging that establishment of the first connection with the second device is completed; the first device generates the first key based on the key generation parameter and the second key; the first device transmits the second indication information to the second device in a case where it is determined that the first key is generated; and the first device receives the second response information transmitted by the second device, where the second response information is used for acknowledging that the first key is obtained, and the second response information is further used for acknowledging that the first connection is established securely and successfully.

The processing of the second device may include the following operations. The second device receives the second indication information transmitted by the first device; the second device transmits the key request information to the access network device in a case where the second device receives the second indication information transmitted by the first device, where the key request information carries the second acknowledgement information of the second request information; the second device receives the second information transmitted by the access network device; and the second device transmits the second response information to the first device.

In conjunction with FIG. 13, an exemplary description is provided by taking the first device as a remote UE, the second device as a relay UE, the access network device as a gNB, the second request information as second MP trigger information, the second indication information as a second SMC, and the second response information as a second SMC response as an example, specifically, which includes the following.

In S1301, the gNB generates the first key.

Here, the execution order (the timing) in which the gNB generates the first key may be any time prior to the timing of S1307. The present example does not limit the timing at which the gNB generates the first key.

In S1302, the gNB transmits the first information to the remote UE, where the first information carries the key generation parameter and second MP trigger information, and the second MP trigger information is used for requesting to establish the first connection.

In S1303, the remote UE transmits the second acknowledgement information of the second MP trigger information to the gNB.

In S1304, the remote UE generates the first key based on the key generation parameter.

Here, the execution order of the S1304 and S1303 may not be in particular order.

In S1305, the remote UE transmits the second SMC to the relay UE, where the second SMC carries the second acknowledgement information of the second MP trigger information.

Before the S1305, the remote UE needs to complete the establishment of the PC5 connection with the relay UE.

In S1306, the relay UE transmits the key request information to the gNB.

In S1307, the gNB transmits the second information to the relay UE, where the second information carries the first key.

Before the S1307 is performed, the secure connection of the Uu interface may be established firstly between the access network device and the second device.

In S1308, the relay UE transmits the second SMC response to the remote UE, where the second SMC response is used for acknowledging that the first key is obtained, and further used for acknowledging that the first connection is established securely and successfully.

It should be noted that the carrying manner of the first information, second information, the acknowledgement information of the second information and other information is the same as the carrying manner of those in the above embodiments, and thus carrying messages of each kind of information are not described in detail for the sake of brevity in the drawings corresponding to the above examples.

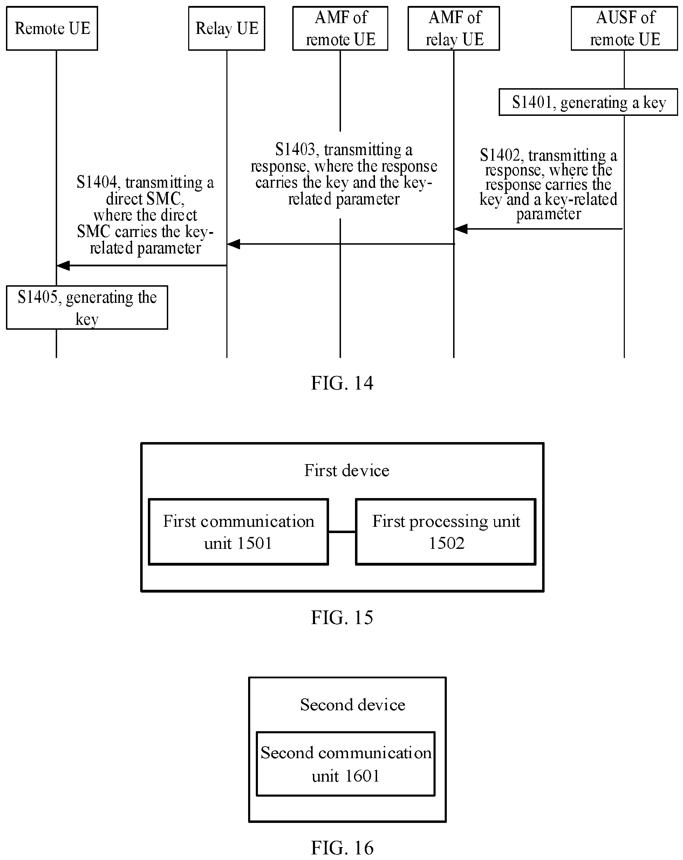

Finally, the description is provided below in conjunction with the security establishment procedure for remote UE-to-relay UE layer 2 in the related technology of FIG. 14. In S1401, an authentication server function (AUSF) of a remote UE generates a key, where the key may be represented as *K*_{*NR_*Pr*oSe*}. In S1402, the AUSF of the remote UE transmits a response to an AMF of a relay UE, where the response carries the key and a key-related parameter. The key-related parameter may include a second random number (may be represented as Nonce-2), and may also include an extensible authentication protocol (EAP) success identifier. The response may be an authentication response, which is not limited herein. In S1403, the AMF of the relay UE transmits a response to the relay UE, where the response carries the key and the key-related parameter. In S1404, the relay UE transmits a direct SMC to the remote UE, where the direct SMC carries the key-related parameter. In S1405, the remote UE generates the key. In the illustration of FIG. 14, only the processing for the remote UE and the relay UE to obtain the key is described. Before the S1401, the remote UE and the relay UE may also interact with other network elements of a core network, such as the processing for the remote UE to discover the relay UE, the processing for the relay UE to perform authentication, or the like, which are not described in detail in FIG. 14. In addition, after the S1405, the remote UE may also complete processing such as the SMC acknowledgement procedure with the relay UE, and the detailed description thereof is not described in FIG. 14 either.

Through the exemplary illustration of FIG. 14, it can be seen that in the related technology, if the relay UE and the remote UE need to obtain the key and key-related parameter, the relay UE and the remote UE need to interact a lot with the network elements such as AMF and AUSF of the core network, however, this way will result in low processing efficiency for the relay UE and the remote UE to obtain the key, and is not suitable for the requirement of efficiently establishing the secure first connection in the MP scenario.

By adopting the solutions provided in the present embodiment, the first device may directly obtain the key generation parameter from the access network device to generate the first key, so as to perform security processing on the data transmitted on the connection between the first device and the second device. In addition, the second device may also directly obtain the first key from the access network device. In this way, the problem of low processing efficiency caused by a large amount of signaling interactions with the core network device to obtain the key is avoided. According to the solutions provided in the present disclosure, the first device is enabled to directly interact with the access network device to obtain the first key, thereby improving the processing efficiency of generating the first key, ensuring that the secure connection between the first device and the second device is established efficiently, and further improving the processing efficiency of the entire communication system.

FIG. 15 is a schematic diagram of a composition structure of a first device in accordance with an embodiment of the present disclosure, and the first device includes:
a first communication unit 1501, configured to receive first information transmitted by an access network device, where the first information carries a key generation parameter; and
a first processing unit 1502, configured to generate a first key based on the key generation parameter, where the first key is used for performing security processing on data transmitted on a first connection, and the first connection is a connection between the first device and a second device.

The first processing unit is configured to generate the first key based on the key generation parameter and a second key, where the second key is used for performing security processing on data transmitted on a second connection, and the second connection is a connection between the first device and the access network device.

The first communication unit is configured to transmit first request information to the access network device before receiving the first information transmitted by the access network device, where the first request information is used for requesting to establish the first connection.

The first request information carries relevant information of the second device.

The first information further carries first indication information, and the first indication information is used for instructing to negotiate the first key with the first device.

The first communication unit is configured to perform one of: receiving first indication information transmitted by the second device, where the first indication information is used for instructing to negotiate the first key with the first device; or receiving first indication information transmitted by the access network device.

The first communication unit is configured, after the first processing unit generates the first key based on the key generation parameter, to: transmit first response information to the second device, where the first response information is used for acknowledging that the first key is generated; and receive acknowledgement information of the first request information transmitted by the second device, where the acknowledgement information of the first request information is used for acknowledging that the first connection is established securely and successfully.

The first communication unit is configured, after the first processing unit generates the first key based on the key generation parameter, to: transmit second indication information to the second device, where the second indication information is used for instructing to negotiate the first key with the second device; and receive second response information transmitted by the second device, where the second response information is used for acknowledging that the first key is obtained.

The second response information is further used for acknowledging that the first connection is established securely and successfully.

The first communication unit is configured to receive acknowledgement information of the first request information transmitted by the second device after receiving the second response information transmitted by the second device, where the acknowledgement information of the first request information is used for acknowledging that the first connection is established securely and successfully.

The first request information is carried by a first radio resource control (RRC) message, and the first information is carried by a second RRC message.

The first information further carries second request information, and the second request information is used for requesting to establish the first connection.

The first information further carries relevant information of the second device.

The first information is carried by a third RRC message.

The first communication unit is configured to: receive first indication information transmitted by the second device, where the first indication information is used for instructing to negotiate the first key with the first device; transmit first response information to the second device after the first processing unit generates the first key based on the key generation parameter, where the first response information is used for acknowledging that the first key is generated; and transmit first acknowledgement information of the second request information to the access network device, where the first acknowledgement information of the second request information is used for acknowledging that the first connection is established securely and successfully.

The first communication unit is configured, after the first processing unit generates the first key based on the key generation parameter, to: transmit second indication information to the second device, where the second indication information is used for instructing to negotiate the first key with the second device; receive second response information transmitted by the second device, where the second response information is used for acknowledging that the first key is obtained; and transmit first acknowledgement information of the second request information to the access network device, where the first acknowledgement information of the second request information is used for acknowledging that the first connection is established securely and successfully.

The first acknowledgement information of the second request information is carried by a fourth RRC message.

The first communication unit is configured, after the first processing unit generates the first key based on the key generation parameter, to: transmit second indication information to the second device, where the second indication information is used for instructing to negotiate the first key with the second device; and receive second response information transmitted by the second device, where the second response information is used for acknowledging that the first key is obtained, and the second response information is further used for acknowledging that the first connection is established securely and successfully.

The second indication information further carries second acknowledgement information of the second request information, and the second acknowledgement information of the second request information is used for acknowledging that establishment of the first connection with the second device is completed.

The first communication unit is configured to transmit second acknowledgement information of the second request information to the access network device before the first processing unit generates the first key based on the key generation parameter, where the second acknowledgement information of the second request information is used for acknowledging that establishment of the first connection with the second device is completed, and the first acknowledgement information of the second request information is carried by a fifth RRC message.

The key generation parameter includes at least one of: relevant information of the second device, a random number, a count value related to the first connection, relevant information of a radio bearer (RB) between the first device and the access network device, or a session identifier between the first device and the access network device.

The relevant information of the bearer between the first device and the access network device includes at least one of: an identifier of a data radio bearer (DRB) between the first device and the access network device, or an identifier of a signaling radio bearer (SRB) between the first device and the access network device.

The first device is a remote terminal device, and the second device is a relay terminal device.

FIG. 16 is a schematic diagram of a composition structure of a second device in accordance with an embodiment of the present disclosure, and the second device includes:
a second communication unit 1601, configured to receive second information transmitted by an access network device, the second information carrying a first key, where the first key is used for performing security processing on data transmitted on a first connection, and the first connection is a connection between a first device and the second device.

The second communication unit is configured to transmit first indication information after receiving the second information transmitted by the access network device, where the first indication information is used for instructing to negotiate the first key with the first device; and receive first response information transmitted by the first device, where the first response information is used for acknowledging that the first key is generated.

The second communication unit is configured to transmit the first indication information to the first device.

The second information further carries first request information, and the first request information is used for requesting to establish the first connection; and
the second communication unit is configured to transmit acknowledgement information of the first request information to the first device in a case where the first response information transmitted by the first device is received, where the acknowledgement information of the first request information is used for acknowledging that the first connection is established securely and successfully.

The second communication unit is configured to perform one of: transmitting acknowledgement information of the second information to the access network device, where the acknowledgement information of the second information carries the first indication information; transmitting the first indication information to the access network device after transmitting acknowledgement information of the second information to the access network device; or transmitting the first indication information to the first device after transmitting acknowledgement information of the second information to the access network device.

The second communication unit is configured to receive second indication information transmitted by the first device, where the second indication information is used for instructing to negotiate the first key with the second device; and transmit second response information to the first device after receiving the second information transmitted by the access network device, where the second response information is used for acknowledging that the first key is obtained.

The second information further carries first request information, and the first request information is used for requesting to establish the first connection; and
the second communication unit is configured to transmit acknowledgement information of the first request information to the first device in a case where the second response information is transmitted to the first device, where the acknowledgement information of the first request information is used for acknowledging that the first connection is established securely and successfully.

The second information further carries first request information, the first request information is used for requesting to establish the first connection, and the second response information is further used for acknowledging that the first connection is established securely and successfully.

The second communication unit is configured to transmit key request information to the access network device in a case where the second indication information transmitted by the first device is received; and receive the second information transmitted by the access network device.

The second indication information further carries second acknowledgement information of second request information, and the second acknowledgement information of the second request information is used for acknowledging that establishment of the first connection is completed; and the key request information carries the second acknowledgement information of the second request information.

The second information is carried by a sixth RRC message.

The first device is a remote terminal device, and the second device is a relay terminal device.

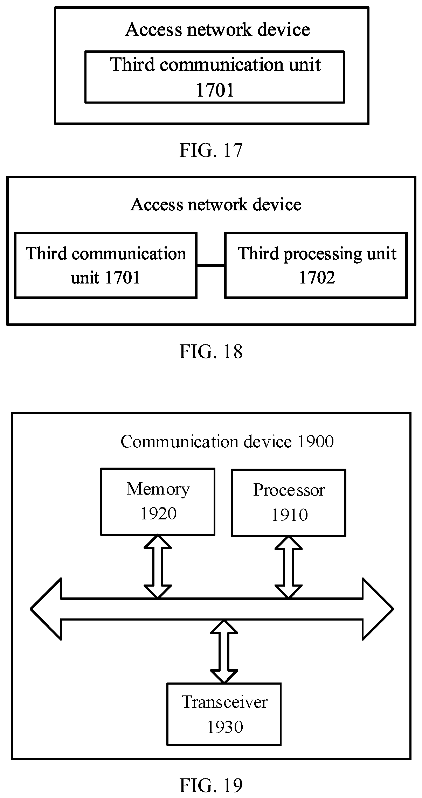

FIG. 17 is a schematic diagram of a composition structure of an access network device in accordance with an embodiment of the present disclosure, and the access network device includes:
a third communication unit 1701, configured to transmit first information to a first device and transmit second information to a second device, where the first information carries a key generation parameter, and the key generation parameter is used for generating a first key; and the first key is used for performing security processing on data transmitted on a first connection, and the first connection is a connection between the first device and the second device.

The third communication unit is configured to receive first request information transmitted by the first device, before transmitting first information to the first device and transmitting the second information to the second device, where the first request information is used for requesting to establish the first connection.

The first request information carries relevant information of the second device.

Based on FIG. 17, as illustrated in FIG. 18, the access network device further includes:
a third processing unit 1702, configured to generate the first key after the third communication unit receives the first request information transmitted by the first device;
where the third communication unit 1701 is configured to transmit the second information to the second device in a case where the third processing unit generates the first key.

The second information further carries the first request information.

The third communication unit is configured to receive first indication information transmitted by the second device after transmitting the second information to the second device, where the first indication information is used for instructing to negotiate the first key with the first device.

The third communication unit is configured to perform one of: receiving acknowledgement information of the second information transmitted by the second device, where the acknowledgement information of the second information carries the first indication information; or receiving the first indication information transmitted by the second device after receiving acknowledgement information of the second information transmitted by the second device.

The third communication unit is configured to transmit the first information to the first device in a case where the first indication information transmitted by the second device is received, where the first information carries the first indication information.

The third communication unit is configured to transmit the first indication information to the first device in a case where the first indication information transmitted by the second device is received.

The first request information is carried by a first RRC message, and the first information is carried by a second RRC message.

The first information further carries second request information, and the second request information is used for requesting to establish the first connection.

The first information further carries relevant information of the second device.

The first information is carried by a third RRC message.

The third communication unit is configured to receive first acknowledgement information of the second request information transmitted by the first device, where the first acknowledgement information of the second request information is used for acknowledging that the first connection is established securely and successfully, and the first acknowledgement information of the second request information is carried by a fourth RRC message.

The third communication unit is configured to transmit first information to the first device, receive key request information transmitted by the second device; and transmit the second information to the second device.

The key request information carries second acknowledgement information of the second request information, and the second acknowledgement information of the second request information is used for acknowledging that establishment of the first connection with the second device is completed.

The third communication unit is configured to receive the second acknowledgement information of the second request information transmitted by the first device before receiving the key request information transmitted by the second device, where the second acknowledgement information of the second request information is used for acknowledging that establishment of the first connection with the second device is completed, and the second acknowledgement information of the second request information is carried by a fifth RRC message.

The second information is carried by a sixth RRC message.

The access network device further includes: the third processing unit, configured to generate the first key before the third communication unit transmits the second information to the second device.

The third processing unit is configured to generate the first key based on the key generation parameter and a second key, where the second key is used for performing security processing on data transmitted on a second connection, and the second connection is a connection between the first device and the access network device.

The key generation parameter includes at least one of: relevant information of the second device, a random number, a count value related to the first connection, relevant information of a radio bearer (RB) between the first device and the access network device, or a session identifier between the first device and the access network device.

The relevant information of the bearer between the first device and the access network device includes at least one of: an identifier of a data radio bearer (DRB) between the first device and the access network device, or an identifier of a signaling radio bearer (SRB) between the first device and the access network device.

The first device is a remote terminal device, and the second device is a relay terminal device.

FIG. 19 is a schematic structural diagram of a communication device 1900 in accordance with the embodiments of the present disclosure. The communication device 1900 includes a processor 1910, and the processor 1910 may call a computer program from a memory and run the computer program, to enable the communication device 1900 to implement the methods in the embodiments of the present disclosure.

In a possible implementation, the communication device 1900 may further include a memory 1920. The processor 1910 may call a computer program from the memory 1920 and run the computer program, to enable the communication device 1900 to implement the methods in the embodiments of the present disclosure.

The memory 1920 may be a separate device independent of the processor 1910, and may also be integrated into the processor 1910.

In a possible implementation, the communication device 1900 may further include a transceiver 1930, and the processor 1910 may control the transceiver 1930 to communicate with other devices, specifically, may transmit information or data to other devices, or receive information or data transmitted by other devices.

The transceiver 1930 may include a transmitter and a receiver. The transceiver 1930 may further include an antenna, and the number of the antenna may be one or more.

In a possible implementation, the communication device 1900 may be the first device of the embodiments of the present disclosure, and the communication device 1900 may implement the corresponding processes implemented by the first device in various methods of the embodiments of the present disclosure, which will not be repeated herein for the sake of brevity.

In a possible implementation, the communication device 1900 may be the second device of the embodiment of the present disclosure, and the communication device 1900 may implement the corresponding processes implemented by the second device in various methods of the embodiment of the present disclosure, which will not be repeated here for the sake of brevity.

In a possible implementation, the communication device 1900 may be the access network device of the embodiments of the present disclosure, and the communication device 1900 may implement the corresponding processes implemented by the access network device in various methods of the embodiments of the present disclosure, which will not be repeated herein for the sake of brevity.

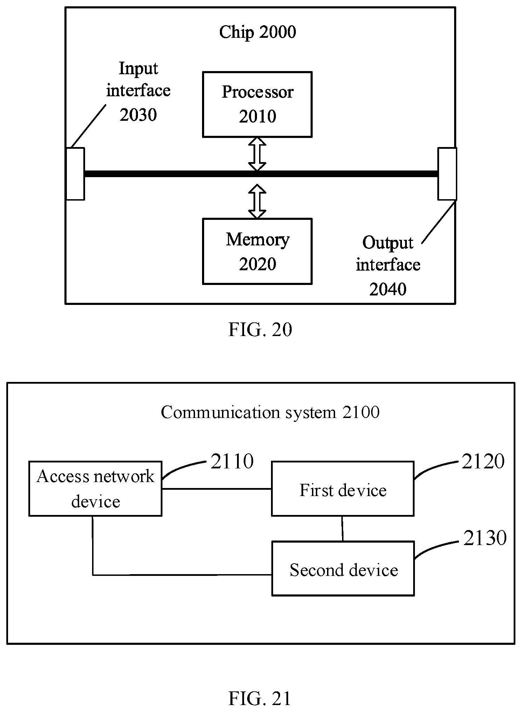

FIG. 20 is a schematic structural diagram of a chip 2000 in accordance with the embodiments of the present disclosure. The chip 2000 includes a processor 2010, and the processor 2010 may call a computer program from a memory and run the computer program, to implement the methods in the embodiments of the present disclosure.

In a possible implementation, the chip 2000 may further include a memory 2020, where the processor 2010 may call a computer program from the memory 2020 and run the computer program, to implement the methods performed by the access network deviceor the first core network device in the embodiments of the present disclosure.

The memory 2020 may be a separate device independent of the processor 2010, or may be integrated into the processor 2010.

In a possible implementation, the chip 2000 may further include an input interface 2030. The processor 2010 may control the input interface 2030 to communicate with other devices or chips, and specifically, may acquire information or data transmitted by other devices or chips.

In a possible implementation, the chip 2000 may further include an output interface 2040. The processor 2010 may control the output interface 2040 to communicate with other devices or chips, and specifically, may output information or data to other devices or chips.

In a possible implementation, the chip may be applied to the access network device in the embodiments of the present disclosure, and the chip may implement the corresponding processes implemented by the access network device in various methods of the embodiments of the present disclosure, which will not be repeated herein for the sake of brevity. In a possible implementation, the chip may be applied to the first device in the embodiments of the present disclosure, and the chip may implement the corresponding processes implemented by the first device in various methods of the embodiments of the present disclosure, which will not be repeated herein for the sake of brevity. In a possible implementation, the chip may be applied to the second device in the embodiments of the present disclosure, and the chip may implement the corresponding processes implemented by the second device in various methods of the embodiments of the present disclosure, which will not be repeated herein for the sake of brevity. The chips used for the access network device, the first device and the second device may be a same chip or different chips.

It should be understood that the chip mentioned in the embodiments of the present disclosure may also be called a system-level chip, a system chip, a chip system or a system-on-chip.

The above-mentioned processor may be a general purpose processor, a digital signal processor (DSP), a field programmable gate array (FPGA), an application specific integrated circuit (ASIC), other programmable logic device, transistor logic devices, a discrete hardware component, etc. The general purpose processor mentioned above may be a microprocessor, or the processor may be any conventional processor.

The above-mentioned memory may be a volatile memory or a nonvolatile memory, or may include both volatile and nonvolatile memories. Among them, the non-volatile memory can be a read-only memory (ROM), a programmable read-only memory (programmable ROM, PROM), an erasable programmable read-only memory (erasable PROM, EPROM), an electrically erasable programmable read-only memory (erasable EPROM, EEPROM), or a flash memory. The volatile memory may be a random access memory (RAM).

It should be understood that the above-mentioned memory is exemplary but not limited illustration. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM) a direct memory bus random access memory (Direct Rambus RAM, DR RAM), or the like. That is, the memories in the embodiments of the present disclosure are intended to include, but not limited to, these and any other suitable types of memory.

FIG. 21 is a schematic block diagram of a communication system 2100 in accordance with the embodiments of the present disclosure. The communication system 2100 includes an access network device 2110, a first device 2120, and a second device 2130. The access network device 2110 may be used to implement the corresponding functions implemented by the access network device in the above methods, and the first device 2120 may be used to implement the corresponding functions implemented by the first device in the above methods. The second device 2130 may be used to implement the corresponding functions implemented by the second device in the above methods, which will not be repeated herein for the sake of brevity.

The above embodiments may be implemented in whole or in part by software, hardware, firmware or any combination thereof. When the embodiments are implemented by using software, they may be implemented in whole or in part in the form of a computer program product. The computer program product includes one or more computer instructions. When the computer program instructions are loaded and executed on a computer, the processes or functions in the embodiments of the present disclosure are generated in whole or in part. The computer may be a general purpose computer, a dedicated computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via wired (e.g., coaxial cable, optical fiber, digital subscriber line (DSL)) or wireless (e.g., infrared, wireless, microwave, etc.) mode. The computer-readable storage medium may be any available medium that can be read by a computer or a data storage device such as a server or a data center that includes one or more available media, etc. The available medium may be a magnetic medium (e.g., a floppy disk, a hard disk, a magnetic tape), an optical medium (e.g., a DVD), or a semiconductor medium (e.g., a solid state disk (SSD)), etc.

It should be understood that, in the various embodiments of the present disclosure, the magnitude of the serial numbers of the above processes does not mean the execution order. The execution order of the processes should be determined by their functions and internal logic, and should not constitute any limitation on the implementation process of the embodiments of the present disclosure.

Those skilled in the art may clearly understand that, for convenience and brevity of description, the specific working processes of the system, devices and units described above may refer to the corresponding processes in the above method embodiments and will not be repeated here.

The above descriptions are only specific implementations of the present disclosure, but the protection scope of the present disclosure is not limited thereto. Any person skilled in the art may readily conceive of variations or substitutions within the technical scope disclosed in the present disclosure, which should be included within the protection scope of the present disclosure. Therefore, the protection scope of the present disclosure shall be subject to the projection scope of the claims.

## Claims

1. A communication method, comprising:
receiving, by a first device, first information transmitted by an access network device, wherein the first information carries a key generation parameter; and
generating, by the first device, a first key based on the key generation parameter, wherein the first key is used for performing security processing on data transmitted on a first connection, and the first connection is a connection between the first device and a second device.

2. The method according to claim 1, wherein generating, by the first device, the first key based on the key generation parameter comprises:
generating, by the first device, the first key based on the key generation parameter and a second key, wherein the second key is used for performing security processing on data transmitted on a second connection, and the second connection is a connection between the first device and the access network device.

3. The method according to claim 2, wherein before receiving, by the first device, the first information transmitted by the access network device, the method further comprises:
transmitting, by the first device, first request information to the access network device, wherein the first request information is used for requesting to establish the first connection.

4. The method according to claim 3, wherein the first request information carries relevant information of the second device.

5. The method according to claim 3 or 4, wherein the first information further carries first indication information, and the first indication information is used for instructing to negotiate the first key with the first device.

6. The method according to claim 3 or 4, further comprising one of:
receiving, by the first device, first indication information transmitted by the second device, wherein the first indication information is used for instructing to negotiate the first key with the first device; or
receiving, by the first device, first indication information transmitted by the access network device.

7. The method according to claim 5 or 6, wherein after generating, by the first device, the first key based on the key generation parameter, the method further comprises:
transmitting, by the first device, first response information to the second device, wherein the first response information is used for acknowledging that the first key is generated; and
receiving, by the first device, acknowledgement information of the first request information transmitted by the second device, wherein the acknowledgement information of the first request information is used for acknowledging that the first connection is established securely and successfully.

8. The method according to claim 3 or 4, wherein after generating, by the first device, the first key based on the key generation parameter, the method further comprises:
transmitting, by the first device, second indication information to the second device, wherein the second indication information is used for instructing to negotiate the first key with the second device; and
receiving, by the first device, second response information transmitted by the second device, wherein the second response information is used for acknowledging that the first key is obtained.

9. The method according to claim 8, wherein the second response information is further used for acknowledging that the first connection is established securely and successfully.

10. The method according to claim 8, wherein after receiving, by the first device, the second response information transmitted by the second device, the method further comprises:
receiving, by the first device, acknowledgement information of the first request information transmitted by the second device, wherein the acknowledgement information of the first request information is used for acknowledging that the first connection is established securely and successfully.

11. The method according to any one of claims 3 to 10, wherein the first request information is carried by a first radio resource control (RRC) message, and the first information is carried by a second RRC message.

12. The method according to claim 2, wherein the first information further carries second request information, and the second request information is used for requesting to establish the first connection.

13. The method according to claim 12, wherein the first information further carries relevant information of the second device.

14. The method according to claim 12 or 13, wherein the first information is carried by a third RRC message.

15. The method according to any one of claims 12 to 14, further comprising:
receiving, by the first device, first indication information transmitted by the second device, wherein the first indication information is used for instructing to negotiate the first key with the first device;
wherein after generating, by the first device, the first key based on the key generation parameter, the method further comprises:
transmitting, by the first device, first response information to the second device, wherein the first response information is used for acknowledging that the first key is generated; and
transmitting, by the first device, first acknowledgement information of the second request information to the access network device, wherein the first acknowledgement information of the second request information is used for acknowledging that the first connection is established securely and successfully.

16. The method according to any one of claims 12 to 14, wherein after generating, by the first device, the first key based on the key generation parameter, the method further comprises:
transmitting, by the first device, second indication information to the second device, wherein the second indication information is used for instructing to negotiate the first key with the second device;
receiving, by the first device, second response information transmitted by the second device, wherein the second response information is used for acknowledging that the first key is obtained; and
transmitting, by the first device, first acknowledgement information of the second request information to the access network device, wherein the first acknowledgement information of the second request information is used for acknowledging that the first connection is established securely and successfully.

17. The method according to claim 16, wherein the first acknowledgement information of the second request information is carried by a fourth RRC message.

18. The method according to any one of claims 12 to 14, wherein after generating, by the first device, the first key based on the key generation parameter, the method further comprises:
transmitting, by the first device, second indication information to the second device, wherein the second indication information is used for instructing to negotiate the first key with the second device; and
receiving, by the first device, second response information transmitted by the second device, wherein the second response information is used for acknowledging that the first key is obtained, and the second response information is further used for acknowledging that the first connection is established securely and successfully.

19. The method according to claim 16 or 18, wherein the second indication information further carries second acknowledgement information of the second request information, and the second acknowledgement information of the second request information is used for acknowledging that establishment of the first connection with the second device is completed.

20. The method according to claim 16 or 18, wherein before generating, by the first device, the first key based on the key generation parameter, the method further comprises:
transmitting, by the first device, second acknowledgement information of the second request information to the access network device, wherein the second acknowledgement information of the second request information is used for acknowledging that establishment of the first connection with the second device is completed, and first acknowledgement information of the second request information is carried by a fifth RRC message.

21. The method according to any one of claims 1 to 20, wherein the key generation parameter comprises at least one of:
relevant information of the second device, a first random number, a count value related to the first connection, relevant information of a radio bearer (RB) between the first device and the access network device, or a session identifier between the first device and the access network device.

22. The method according to claim 21, wherein the relevant information of the RB between the first device and the access network device comprises at least one of:
an identifier of a data radio bearer (DRB) between the first device and the access network device, or an identifier of a signaling radio bearer (SRB) between the first device and the access network device.

23. The method according to any one of claims 1 to 22, wherein the first device is a remote terminal device, and the second device is a relay terminal device.

24. A communication method, comprising:
receiving, by a second device, second information transmitted by an access network device, the second information carrying a first key, wherein the first key is used for performing security processing on data transmitted on a first connection, and the first connection is a connection between a first device and the second device.

25. The method according to claim 24, wherein after receiving, by the second device, the second information transmitted by the access network device, the method further comprises:
transmitting, by the second device, first indication information, wherein the first indication information is used for instructing to negotiate the first key with the first device; and
receiving, by the second device, first response information transmitted by the first device, wherein the first response information is used for acknowledging that the first key is generated.

26. The method according to claim 25, wherein transmitting, by the second device, the first indication information comprises:
transmitting, by the second device, the first indication information to the first device.

27. The method according to claim 25, wherein the second information further carries first request information, and the first request information is used for requesting to establish the first connection; and
the method further comprises:
transmitting, by the second device, acknowledgement information of the first request information to the first device in a case where the second device receives the first response information transmitted by the first device, wherein the acknowledgement information of the first request information is used for acknowledging that the first connection is established securely and successfully.

28. The method according to claim 27, wherein transmitting, by the second device, the first indication information comprises one of:
transmitting, by the second device, acknowledgement information of the second information to the access network device, wherein the acknowledgement information of the second information carries the first indication information;
transmitting, by the second device, the first indication information to the access network device after the second device transmits acknowledgement information of the second information to the access network device; or
transmitting, by the second device, the first indication information to the first device after the second device transmits acknowledgement information of the second information to the access network device.

29. The method according to claim 24, further comprising:
receiving, by the second device, second indication information transmitted by the first device, wherein the second indication information is used for instructing to negotiate the first key with the second device;
wherein after receiving, by the second device, the second information transmitted by the access network device, the method further comprises:
transmitting, by the second device, second response information to the first device, wherein the second response information is used for acknowledging that the first key is obtained.

30. The method according to claim 29, wherein the second information further carries first request information, and the first request information is used for requesting to establish the first connection; and
the method further comprises:
transmitting, by the second device, acknowledgement information of the first request information to the first device in a case where the second device transmits the second response information to the first device, wherein the acknowledgement information of the first request information is used for acknowledging that the first connection is established securely and successfully.

31. The method according to claim 29, wherein the second information further carries first request information, the first request information is used for requesting to establish the first connection, and the second response information is further used for acknowledging that the first connection is established securely and successfully.

32. The method according to claim 29, wherein receiving, by the second device, the second information transmitted by the access network device comprises:
transmitting, by the second device, key request information to the access network device in a case where the second device receives the second indication information transmitted by the first device; and
receiving, by the second device, the second information transmitted by the access network device.

33. The method according to claim 32, wherein the second indication information further carries second acknowledgement information of second request information, and the second acknowledgement information of the second request information is used for acknowledging that establishment of the first connection is completed; and
the key request information carries the second acknowledgement information of the second request information.

34. The method according to any one of claims 24 to 33, wherein the second information is carried by a sixth RRC message.

35. The method according to any one of claims 24 to 34, wherein the first device is a remote terminal device, and the second device is a relay terminal device.

36. A communication method, comprising:
transmitting, by an access network device, first information to a first device; and
transmitting, by the access network device, second information to a second device;
wherein the first information carries a key generation parameter, and the key generation parameter is used for generating a first key; and the first key is used for performing security processing on data transmitted on a first connection, and the first connection is a connection between the first device and the second device.

37. The method according to claim 36, wherein before transmitting, by the access network device, the first information to the first device, and transmitting, by the access network device, the second information to the second device, the method further comprises:
receiving, by the access network device, first request information transmitted by the first device, wherein the first request information is used for requesting to establish the first connection.

38. The method according to claim 37, wherein the first request information carries relevant information of the second device.

39. The method according to claim 37 or 38, wherein after receiving, by the access network device, the first request information transmitted by the first device, the method further comprises:
generating, by the access network device, the first key;
wherein transmitting, by the access network device, the second information to the second device comprises:
transmitting, by the access network device, the second information to the second device in a case where the access network device generates the first key.

40. The method according to claim 39, wherein the second information further carries the first request information.

41. The method according to claim 39 or 40, wherein after transmitting, by the access network device, the second information to the second device, the method further comprises:
receiving, by the access network device, first indication information transmitted by the second device, wherein the first indication information is used for instructing to negotiate the first key with the first device.

42. The method according to claim 41, wherein receiving, by the access network device, the first indication information transmitted by the second device comprises one of:
receiving, by the access network device, acknowledgement information of the second information transmitted by the second device, wherein the acknowledgement information of the second information carries the first indication information; or
receiving, by the access network device, the first indication information transmitted by the second device after receiving acknowledgement information of the second information transmitted by the second device.

43. The method according to claim 41 or 42, wherein transmitting, by the access network device, the first information to the first device comprises:
transmitting, by the access network device, the first information to the first device in a case where the access network device receives the first indication information transmitted by the second device, wherein the first information carries the first indication information.

44. The method according to claim 41 or 42, further comprising:
transmitting, by the access network device, the first indication information to the first device in a case where the access network device receives the first indication information transmitted by the second device.

45. The method according to any one of claims 37 to 44, wherein the first request information is carried by a first RRC message, and the first information is carried by a second RRC message.

46. The method according to claim 36, wherein the first information further carries second request information, and the second request information is used for requesting to establish the first connection.

47. The method according to claim 46, wherein the first information further carries relevant information of the second device.

48. The method according to claim 46 or 47, wherein the first information is carried by a third RRC message.

49. The method according to any one of claims 46 to 48, further comprising:
receiving, by the access network device, first acknowledgement information of the second request information transmitted by the first device, wherein the first acknowledgement information of the second request information is used for acknowledging that the first connection is established securely and successfully, and the first acknowledgement information of the second request information is carried by a fourth RRC message.

50. The method according to any one of claims 46 to 48, wherein transmitting, by the access network device, the first information to the first device, and transmitting, by the access network device, the second information to the second device comprises:
transmitting, by the access network device, the first information to the first device;
receiving, by the access network device, key request information transmitted by the second device; and
transmitting, by the access network device, the second information to the second device.

51. The method according to claim 50, wherein the key request information carries second acknowledgement information of the second request information, and the second acknowledgement information of the second request information is used for acknowledging that establishment of the first connection with the second device is completed.

52. The method according to claim 50, wherein before receiving, by the access network device, the key request information transmitted by the second device, the method further comprises:
receiving, by the access network device, second acknowledgement information of the second request information transmitted by the first device, wherein the second acknowledgement information of the second request information is used for acknowledging that establishment of the first connection with the second device is completed, and the second acknowledgement information of the second request information is carried by a fifth RRC message.

53. The method according to any one of claims 36 to 52, wherein the second information is carried by a sixth RRC message.

54. The method according to any one of claims 46 to 52, wherein before transmitting, by the access network device, the second information to the second device, the method further comprises:
generating, by the access network device, the first key.

55. The method according to claim 39 or 54, wherein generating, by the access network device, the first key comprises:
generating, by the access network device, the first key based on the key generation parameter and a second key, wherein the second key is used for performing security processing on data transmitted on a second connection, and the second connection is a connection between the first device and the access network device.

56. The method according to any one of claims 36 to 55, wherein the key generation parameter comprises at least one of:
relevant information of the second device, a first random number, a count value related to the first connection, relevant information of a radio bearer (RB) between the first device and the access network device, or a session identifier between the first device and the access network device.

57. The method according to claim 56, wherein the relevant information of the RB between the first device and the access network device comprises at least one of:
an identifier of a data radio bearer (DRB) between the first device and the access network device, or an identifier of a signaling radio bearer (SRB) between the first device and the access network device.

58. The method according to any one of claims 36 to 57, wherein the first device is a remote terminal device, and the second device is a relay terminal device.

59. A first device, comprising:
a first communication unit, configured to receive first information transmitted by an access network device, wherein the first information carries a key generation parameter; and
a first processing unit, configured to generate a first key based on the key generation parameter, wherein the first key is used for performing security processing on data transmitted on a first connection, and the first connection is a connection between the first device and a second device.

60. The first device according to claim 59, wherein the first processing unit is configured to generate the first key based on the key generation parameter and a second key, wherein the second key is used for performing security processing on data transmitted on a second connection, and the second connection is a connection between the first device and the access network device.

61. The first device according to claim 60, wherein the first communication unit is configured to transmit first request information to the access network device before receiving the first information transmitted by the access network device, wherein the first request information is used for requesting to establish the first connection.

62. The first device according to claim 61, wherein the first request information carries relevant information of the second device.

63. The first device according to claim 61 or 62, wherein the first information further carries first indication information, and the first indication information is used for instructing to negotiate the first key with the first device.

64. The first device according to claim 61 or 62, wherein the first communication unit is configured to perform one of:
receiving first indication information transmitted by the second device, wherein the first indication information is used for instructing to negotiate the first key with the first device; or
receiving first indication information transmitted by the access network device.

65. The first device according to claim 63 or 64, wherein the first communication unit is configured, after the first processing unit generates the first key based on the key generation parameter, to:
transmit first response information to the second device, wherein the first response information is used for acknowledging that the first key is generated; and
receive acknowledgement information of the first request information transmitted by the second device, wherein the acknowledgement information of the first request information is used for acknowledging that the first connection is established securely and successfully.

66. The first device according to claim 61 or 62, wherein the first communication unit is configured, after the first processing unit generates the first key based on the key generation parameter, to:
transmit second indication information to the second device, wherein the second indication information is used for instructing to negotiate the first key with the second device; and
receive second response information transmitted by the second device, wherein the second response information is used for acknowledging that the first key is obtained.

67. The first device according to claim 66, wherein the second response information is further used for acknowledging that the first connection is established securely and successfully.

68. The first device according to claim 66, wherein the first communication unit is configured to receive acknowledgement information of the first request information transmitted by the second device after receiving the second response information transmitted by the second device, wherein the acknowledgement information of the first request information is used for acknowledging that the first connection is established securely and successfully.

69. The first device according to any one of claims 61 to 68, wherein the first request information is carried by a first radio resource control (RRC) message, and the first information is carried by a second RRC message.

70. The first device according to claim 60, wherein the first information further carries second request information, and the second request information is used for requesting to establish the first connection.

71. The first device according to claim 70, wherein the first information further carries relevant information of the second device.

72. The first device according to claim 70 or 71, wherein the first information is carried by a third RRC message.

73. The first device according to any one of claims 70 to 72, wherein the first communication unit is configured to: receive first indication information transmitted by the second device, wherein the first indication information is used for instructing to negotiate the first key with the first device;
transmit first response information to the second device after the first processing unit generates the first key based on the key generation parameter, wherein the first response information is used for acknowledging that the first key is generated; and
transmit first acknowledgement information of the second request information to the access network device, wherein the first acknowledgement information of the second request information is used for acknowledging that the first connection is established securely and successfully.

74. The first device according to any one of claims 70 to 72, wherein the first communication unit is configured, after the first processing unit generates the first key based on the key generation parameter, to:
transmit second indication information to the second device, wherein the second indication information is used for instructing to negotiate the first key with the second device;
receive second response information transmitted by the second device, wherein the second response information is used for acknowledging that the first key is obtained; and
transmit first acknowledgement information of the second request information to the access network device, wherein the first acknowledgement information of the second request information is used for acknowledging that the first connection is established securely and successfully.

75. The first device according to claim 74, wherein the first acknowledgement information of the second request information is carried by a fourth RRC message.

76. The first device according to any one of claims 70 to 72, wherein the first communication unit is configured, after the first processing unit generates the first key based on the key generation parameter, to:
transmit second indication information to the second device, wherein the second indication information is used for instructing to negotiate the first key with the second device; and
receive second response information transmitted by the second device, wherein the second response information is used for acknowledging that the first key is obtained, and the second response information is further used for acknowledging that the first connection is established securely and successfully.

77. The first device according to claim 74 or 76, wherein the second indication information further carries second acknowledgement information of the second request information, and the second acknowledgement information of the second request information is used for acknowledging that establishment of the first connection with the second device is completed.

78. The first device according to claim 74 or 76, wherein the first communication unit is configured to transmit second acknowledgement information of the second request information to the access network device before the first processing unit generates the first key based on the key generation parameter, wherein the second acknowledgement information of the second request information is used for acknowledging that establishment of the first connection with the second device is completed, and the first acknowledgement information of the second request information is carried by a fifth RRC message.

79. The first device according to any one of claims 59 to 78, wherein the key generation parameter comprises at least one of:
relevant information of the second device, a random number, a count value related to the first connection, relevant information of a radio bearer (RB) between the first device and the access network device, or a session identifier between the first device and the access network device.

80. The first device according to claim 79, wherein the relevant information of the RB between the first device and the access network device comprises at least one of:
an identifier of a data radio bearer (DRB) between the first device and the access network device, or an identifier of a signaling radio bearer (SRB) between the first device and the access network device.

81. The first device according to any one of claims 59 to 80, wherein the first device is a remote terminal device, and the second device is a relay terminal device.

82. A second device, comprising:
a second communication unit, configured to receive second information transmitted by an access network device, the second information carrying a first key, wherein the first key is used for performing security processing on data transmitted on a first connection, and the first connection is a connection between a first device and the second device.

83. The second device according to claim 82, wherein the second communication unit is configured to transmit first indication information after receiving the second information transmitted by the access network device, wherein the first indication information is used for instructing to negotiate the first key with the first device; and
receive first response information transmitted by the first device, wherein the first response information is used for acknowledging that the first key is generated.

84. The second device according to claim 83, wherein the second communication unit is configured to transmit the first indication information to the first device.

85. The second device according to claim 83, wherein the second information further carries first request information, and the first request information is used for requesting to establish the first connection; and
the second communication unit is configured to transmit acknowledgement information of the first request information to the first device in a case where the first response information transmitted by the first device is received, wherein the acknowledgement information of the first request information is used for acknowledging that the first connection is established securely and successfully.

86. The second device according to claim 85, wherein the second communication unit is configured to perform one of:
transmitting acknowledgement information of the second information to the access network device, wherein the acknowledgement information of the second information carries the first indication information;
transmitting the first indication information to the access network device after transmitting acknowledgement information of the second information to the access network device; or
transmitting the first indication information to the first device after transmitting acknowledgement information of the second information to the access network device.

87. The second device according to claim 82, wherein the second communication unit is configured to receive second indication information transmitted by the first device, wherein the second indication information is used for instructing to negotiate the first key with the second device; and
transmit second response information to the first device after receiving the second information transmitted by the access network device, wherein the second response information is used for acknowledging that the first key is obtained.

88. The second device according to claim 87, wherein the second information further carries first request information, and the first request information is used for requesting to establish the first connection; and
the second communication unit is configured to transmit acknowledgement information of the first request information to the first device in a case where the second response information is transmitted to the first device, wherein the acknowledgement information of the first request information is used for acknowledging that the first connection is established securely and successfully.

89. The second device according to claim 87, wherein the second information further carries first request information, the first request information is used for requesting to establish the first connection, and the second response information is further used for acknowledging that the first connection is established securely and successfully.

90. The second device according to claim 87, wherein the second communication unit is configured to transmit key request information to the access network device in a case where the second indication information transmitted by the first device is received; and receive the second information transmitted by the access network device.

91. The second device according to claim 90, wherein the second indication information further carries second acknowledgement information of second request information, and the second acknowledgement information of the second request information is used for acknowledging that establishment of the first connection is completed; and
the key request information carries the second acknowledgement information of the second request information.

92. The second device according to any one of claims 82 to 91, wherein the second information is carried by a sixth RRC message.

93. The second device according to any one of claims 82 to 93, wherein the first device is a remote terminal device; and the second device is a relay terminal device.

94. An access network device, comprising:
a third communication unit, configured to transmit first information to a first device and transmit second information to a second device, wherein the first information carries a key generation parameter, and the key generation parameter is used for generating a first key; and the first key is used for performing security processing on data transmitted on a first connection, and the first connection is a connection between the first device and the second device.

95. The access network device according to claim 94, wherein the third communication unit is configured to: receive first request information transmitted by the first device, before transmitting first information to the first device and transmitting the second information to the second device, wherein the first request information is used for requesting to establish the first connection.

96. The access network device according to claim 95, wherein the first request information carries relevant information of the second device.

97. The access network device according to claim 95 or 96, further comprising:
a third processing unit, configured to generate the first key after the third communication unit receives the first request information transmitted by the first device;
wherein the third communication unit is configured to transmit the second information to the second device in a case where the third processing unit generates the first key.

98. The access network device according to claim 97, wherein the second information further carries the first request information.

99. The access network device according to claim 97 or 98, wherein the third communication unit is configured to receive first indication information transmitted by the second device after transmitting the second information to the second device, wherein the first indication information is used for instructing to negotiate the first key with the first device.

100. The access network device according to claim 99, wherein the third communication unit is configured to perform one of:
receiving acknowledgement information of the second information transmitted by the second device, wherein the acknowledgement information of the second information carries the first indication information; or
receiving the first indication information transmitted by the second device after receiving acknowledgement information of the second information transmitted by the second device.

101. The access network device according to claim 99 or 100, wherein the third communication unit is configured to transmit the first information to the first device in a case where the first indication information transmitted by the second device is received, wherein the first information carries the first indication information.

102. The access network device according to claim 99 or 100, wherein the third communication unit is configured to transmit the first indication information to the first device in a case where the first indication information transmitted by the second device is received.

103. The access network device according to any one of claims 95 to 102, wherein the first request information is carried by a first RRC message, and the first information is carried by a second RRC message.

104. The access network device according to claim 94, wherein the first information further carries second request information, and the second request information is used for requesting to establish the first connection.

105. The access network device according to claim 104, wherein the first information further carries relevant information of the second device.

106. The access network device according to claim 104 or 105, wherein the first information is carried by a third RRC message.

107. The access network device according to any one of claims 104 to 106, wherein the third communication unit is configured to receive first acknowledgement information of the second request information transmitted by the first device, wherein the first acknowledgement information of the second request information is used for acknowledging that the first connection is established securely and successfully, and the first acknowledgement information of the second request information is carried by a fourth RRC message.

108. The access network device according to any one of claims 104 to 106, wherein the third communication unit is configured to:
transmit first information to the first device;
receive key request information transmitted by the second device; and
transmit the second information to the second device.

109. The access network device according to claim 108, wherein the key request information carries second acknowledgement information of the second request information, and the second acknowledgement information of the second request information is used for acknowledging that establishment of the first connection with the second device is completed.

110. The access network device according to claim 109, wherein the third communication unit is configured to receive the second acknowledgement information of the second request information transmitted by the first device before receiving the key request information transmitted by the second device, wherein the second acknowledgement information of the second request information is used for acknowledging that establishment of the first connection with the second device is completed, and the second acknowledgement information of the second request information is carried by a fifth RRC message.

111. The access network device according to any one of claims 94 to 110, wherein the second information is carried by a sixth RRC message.

112. The access network device according to any one of claims 104 to 110, further comprising:
a third processing unit, configured to generate the first key before the third communication unit transmits the second information to the second device.

113. The access network device according to claim 94 or 112, wherein the third processing unit is configured to generate the first key based on the key generation parameter and a second key, wherein the second key is used for performing security processing on data transmitted on a second connection, and the second connection is a connection between the first device and the access network device.

114. The access network device according to any one of claims 94 to 113, wherein the key generation parameter comprises at least one of:
relevant information of the second device, a random number, a count value related to the first connection, relevant information of a radio bearer (RB) between the first device and the access network device, or a session identifier between the first device and the access network device.

115. The access network device according to claim 114, wherein the relevant information of the RB between the first device and the access network device comprises at least one of:
an identifier of a data radio bearer (DRB) between the first device and the access network device, or an identifier of a signaling radio bearer (SRB) between the first device and the access network device.

116. The access network device according to any one of claims 94 to 115, wherein the first device is a remote terminal device; and the second device is a relay terminal device.

117. A first device, comprising: a processor and a memory, wherein the memory is configured to store a computer program, and the processor is configured to call the computer program stored in the memory and run the computer program, to enable the first device to perform the method according to any one of claims 1 to 23.

118. A second device, comprising: a processor and a memory, wherein the memory is configured to store a computer program, and the processor is configured to call the computer program stored in the memory and run the computer program, to enable the second device to perform the method according to any one of claims 24 to 35.

119. An access network device, comprising: a processor and a memory, wherein the memory is configured to store a computer program, and the processor is configured to call the computer program stored in the memory and run the computer program, to enable the access network device to perform the method according to any one of claims 36 to 58.

120. A chip, comprising: a processor, configured to call a computer program from a memory and run the computer program, to enable a device equipped with the chip to perform the method according to any one of claims 1 to 23, or the method according to any one of claims 24 to 35 or the method according to any one of claims 36 to 58.

121. A computer-readable storage medium, configured to store a computer program, wherein the computer program, when executed by a device, enables the device to perform the method according to any one of claims 1 to 23, or the method according to any one of claims 24 to 35 or the method according to any one of claims 36 to 58.

122. A computer program product, comprising computer program instructions, wherein the computer program instructions enables a computer to perform the method according to any one of claims 1 to 23, or the method according to any one of claims 24 to 35 or the method according to any one of claims 36 to 58.

123. A computer program, wherein the computer program enables a computer to perform the method according to any one of claims 1 to 23, or the method according to any one of claims 24 to 35 or the method according to any one of claims 36 to 58.
